# EUROPEAN PATENT SPECIFICATION

(11) **EP 1 204 256 B1**
(45) Date of publication and mention of the grant of the patent: **06.06.2012**
(21) Application number: 01941207.1
(22) Date of filing: 25.06.2001
(51) Int. Cl.: H04L 1/00

(54) **ADAPTIVE MODULATION COMMUNICATION SYSTEM**
VERMITTLUNGSYSTEM MIT ADAPTIVER MODULATION
SYSTEME DE COMMUNICATION A MODULATION ADAPTATIVE

(30) Priority: 23.06.2000 JP 2000189411; 22.02.2001 JP 2001047197
(43) Date of publication of application: 08.05.2002
(73) Proprietor: Panasonic Corporation, Kadoma-shi Osaka 571-8501 (JP)
(72) Inventor: UESUGI, Mitsuru, Yokosuka-shi, Kanagawa 238-0048 (JP); KATO, Osamu, Yokosuka-shi, Kanagawa 237-0066 (JP); UE, Toyoki, Yokosuka-shi, Kanagawa 238-0022 (JP)
(74) Representative: Grünecker, Kinkeldey, Stockmair & Schwanhäusser
(86) International application number: PCT/JP2001/005394
(87) International publication number: WO 2001/099367

(56) References cited:
- EP-A- 0 531 046
- EP-A- 0 936 772
- EP-A- 1 018 815
- WO-A-00/76114
- WO-A1-98/12850
- JP-A- 10 093 537
- JP-A- 11 027 232
- JP-A- 2000 324 081
- HO K-P ET AL: "COMBINED SOURCE-CHANNEL CODING USING CHANNEL-OPTIMIZED QUANTIZER AND MULTICARRIER MODULATION" CONVERGING TECHNOLOGIES FOR TOMORROW'S APPLICATIONS. DALLAS, IEEE INTERNATIONAL CONFERENCE ON COMMUNICATIONS (ICC), vol. 3, 23 June 1996 (1996-06-23), - 27 June 1996 (1996-06-27) pages 1323-1327, XP000625026 NEW YORK, IEEE, US ISBN: 0-7803-3251-2
- SHEA J M ED - SWARTS F ET AL: "Adaptive nonuniform PSK signaling in CDMA wireless communications" INFORMATION THEORY AND COMMUNICATIONS WORKSHOP, KRUGER NATIONAL PARK, SOUTH AFRICA, 20 June 1999 (1999-06-20), - 25 June 1999 (1999-06-25) pages 48-50, XP010345509 PISCATAWAY, NJ, USA ISBN: 0-7803-5268-8
- JACOBSMEYER J M: "An adaptive modulation scheme for bandwidth-limited meteor-burst channels" IEEE MILITARY COMMUNICATIONS CONFERENCE, SAN DIEGO, CA,, vol. 3, 23 October 1988 (1988-10-23), - 26 October 1988 (1988-10-26) pages 933-937, XP010072049 New York
- CHI WAI YUNG ET AL: "Unequal error protection for wireless transmission of MPEG audio" CIRCUITS AND SYSTEMS, ISCAS '99. PROCEEDINGS OF THE 1999 IEEE INTERNATIONAL SYMPOSIUM ON ORLANDO, FL, USA, vol. 6, 30 May 1999 (1999-05-30), - 2 June 1999 (1999-06-02) pages 342-345, XP010341642 PISCATAWAY, NJ, USA ISBN: 0-7803-5471-0
- KENTA UMEBAYASHI: 'Software musen no tame no blind tekiou henfukushou no 1 kentou' DENSHI JOHO TSUUSHIN GAKKAI TAIKAI KOUEN RONBUNSHUU vol. 2000, no. SOUGOU 2, March 2000, page 488, XP002942497
- MITSURU UESUGI ET AL.: 'Kaisou fukuchou wo mochiita tekiou henchou packet data densou ni kanshite' DENSHI JOHO TSUUSHIN GAKKAI GIJUTSU KENKYUU HOUKOKU vol. 100, no. 278 (RCS2000 91-104), October 2000, pages 21 - 26, XP002942498
- MITSURU UESUGI ET AL.: 'Kaisouteki fukusho e no hybrid ARQ (type I) no tekiyou' DENSHI JOHO TSUUSHIN GAKKAI GIJUTSU KENKYUU HOUKOKU vol. 100, no. 560 (SAT2000 115-124), February 2001, pages 7 - 12, XP002942499

## Description

### Technical Field

The present invention relates to a new adaptive modulation communication system used in a digital radio communication system.

### Background Art

With recent advances in internet-related techniques, the internet has enabled various services such as music distribution to be provided. Such services increase downlink transmit amounts. In order to achieve such services having increased transmit amounts, great expectations are placed on fast transmission over the downlink, and various techniques have been developed on the downlink fast transmission. One of the techniques is an adaptive modulation communication system where on a transmitting side a modulation scheme is adaptively varied to perform efficient data transmission.

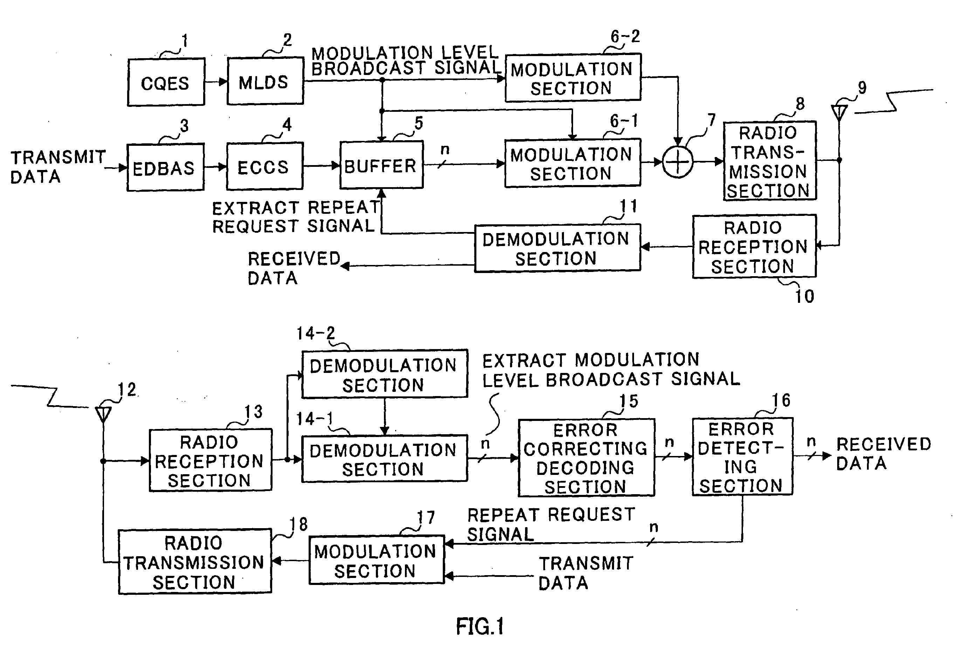

A conventional adaptive modulation communication system will be described with reference to FIG.1.

In the adaptive modulation communication system illustrated in FIG.1, CQES(channel quality estimating section) 1 in a transmitting-side apparatus estimates a channel quality using a received signal. The estimated channel quality information is output to MLDS (modulation level determining section) 2. MLDS 2 determines a modulation level based on the channel quality information. For example, when the channel quality is good, MLDS 2 increases the modulation level, while decreasing the modulation level when the channel quality is poor. A broadcast signal indicative of modulation level is output to buffer 5, while being output to modulation section 6-2.

Transmit data is output to EDBAS(error detecting bit adding section) 3, where an error detecting bit is added. The transmit data with the error detecting bit added thereto is output to ECCS(error correcting coding section) 4 to undergo error correcting coding. The transmit data subjected to the error correcting coding is output to buffer 5 to be stored therein.

To buffer 5 is input the modulation level broadcast signal output from modulation level determining section 2. According to the modulation level broadcast signal, the transmit data is output to modulation section 6-1 for each modulation unit of the determined modulation scheme.

Modulation section 6-2 modulates the modulation level broadcast signal to output to adder 7. Modulation section 6-1 modulates the transmit data output from buffer 5 to output to adder 7. Adder 7 multiplexes the modulation level broadcast signal and the transmit data.

The multiplexed signal is output to radio transmission section 8, is subjected to the predetermined radio transmission processing (for example, D/A conversion and upconverting) in radio transmission section 8, and the resultant radio signal is transmitted to a receiving-side apparatus (communication party) via antenna 9.

The signal transmitted from the transmitting-side apparatus is received in radio reception section 13 via antenna 12 in the receiving-side apparatus. Radio reception section 13 performs the predetermined radio reception processing (for example, downconverting and A/D conversion) on the received signal.

The signal subjected to the radio reception processing is demultiplexed to the modulation level broadcast signal and data, and the signal and data is output to demodulation section 14. Specifically, the data is output to demodulation section 14-1, and the modulation level broadcast signal is output to demodulation section 14-2. Demodulation section 14-2 demodulates the modulation level broadcast signal to obtain information on the modulation scheme (modulation level) on the transmitting-side apparatus. The information on the modulation scheme is output to demodulation section 14-1.

According to the information on the modulation scheme output from demodulation section 14-2, demodulation section 14-1 demodulates the data. The demodulated data is output to error correcting decoding section 15 to undergo error correcting decoding. Then, the error-correcting-decoded data is output to error detecting section 16 to undergo error detection. An output of error detecting section 16 is received data. Further, a detection result (a result when an error is detected) in error detecting section 16 is output to modulation section 17 as a repeat request signal.

Modulation section 17 modulates the repeat request signal as well as the transmit data. The modulated signal is output to radio transmission section 18. Radio transmission section 18 performs the predetermined radio transmission processing on the modulated signal. The signal subjected to the radio transmission processing is transmitted to the transmitting-side apparatus (communication party) via antenna 12.

The signal including the repeat request signal is received in radio reception section 10 via antenna 9. Radio reception section 10 performs the predetermined radio reception processing on the received signal. The signal subjected to the radio reception processing is output to demodulation section 11. Demodulation section 11 demodulates the data and the repeat request signal. The data becomes received data, and the repeat request signal is output to buffer 5. According to the repeat request signal, buffer 5 outputs data targeted for the repeat to modulation section 6-1.

As described above, in the aforementioned adaptive modulation communication system, when a modulation scheme is adaptively varied to transmit signals, the information on the modulation scheme (modulation level or the like) is multiplexed on a transmit signal in transmitting signals. As a result, on the receiving side it is possible to perform demodulation according to the information on the modulation scheme even when the modulation scheme is varied adaptively.

However, in the conventional adaptive modulation communication system, the receiving-side apparatus is not capable of demodulating data unless the transmitting-side notifies the receiving-side apparatus of the information on the modulation scheme (modulation level broadcast signal). Accordingly, it is necessary to transmit the information of the modulation level broadcast signal with greatly high quality. Further, demodulating data is started only after the modulation level broadcast signal is demodulated, and furthermore, an erroneous modulation level broadcast signal disables the reception even when the data quality is high.

Meanwhile, a method is proposed in which a receiving-side apparatus determines a modulation scheme used in a transmitting-side apparatus using a signal variance, but since the detection accuracy is low in this method, is not very practical.

EP 0 531 046 A2 describes a communication system, in which the receiver is provided with plural demodulators configured with different modulation schemes. Upon receiving a signal all demodulators individually try to demodulate a received signal (modulation symbol) using a respective modulation scheme specific to the demodulators, respectively. Thereupon, error values are calculated for each demodulator and the demodulator with the lowest probability of error is selected to output the demodulated data.

### Disclosure of Invention

It is an object of the present invention to provide an adaptive modulation communication system enabling excellent demodulation on a receiving side without notifying information on a modulation scheme when adaptive modulation communications are performed.

The inventor of the present invention noted the state of mapping per bit basis in a signal space diagram in M-ary modulation, found out demodulation is allowed independently of a modulation scheme used in a transmitting-side apparatus by determining demodulation patterns for each predetermined unit, and carried out the present invention.

It is a gist of the present invention that in an adaptive modulation communication system where a modulation scheme is varied adaptively for each transmit unit, a transmitting-side apparatus sets different error detecting units corresponding to bit position, and transmits data subjected to error detecting processing on a different error detecting unit basis corresponding to bit position, and a receiving-side apparatus performs demodulation independently using different demodulation patterns for each error detecting unit to obtain received data.

### Brief Description of Drawings

FIG.1 is a block diagram illustrating a configuration of a conventional adaptive modulation communication system;
FIG.2 is a block diagram illustrating a configuration of an adaptive modulation communication system according to embodiments of the present invention;
FIG.3 is a diagram to explain a signal space diagram of 64QAM;
FIGs.4A to 4F are diagrams to explain a demodulation method for 64QAM in the adaptive modulation communication system of the present invention;
FIG.5 is a diagram to explain a signal space diagram of 16QAM;
FIGs.6A to 6F are diagrams to explain a demodulation method for 16QAM in the adaptive modulation communication system of the present invention;
FIG.7 is a diagram to explain a signal space diagram of QPSK;
FIGs. 8A to 8F are diagrams to explain a demodulation method for QPSK in the adaptive modulation communication system of the present invention;
FIG.9 is a diagram to explain transmission and reception in the adaptive modulation communication system of the present invention;
FIG.10 is another diagram to explain transmission and reception in the adaptive modulation communication system of the present invention;
FIG. 11 is a diagram to explain a signal space diagram of 32QAM;
FIGs.12A to 12F are diagrams to explain a demodulation method for 32QAM in the adaptive modulation communication system of the present invention;
FIG.13 is a diagram to explain a signal space diagram of 8QAM;
FIGs.14A to 14F are diagrams to explain a demodulation method for 8QAM in the adaptive modulation communication system of the present invention;
FIG.15 is a diagram to explain a signal space diagram of BPSK;
FIGs.16A to 16F are diagrams to explain a demodulation method for BPSK in the adaptive modulation communication system of the present invention;
FIG.17 is a diagram to explain a signal space diagram of QPSK;
FIG.18 is a diagram to explain a signal space diagram of 8PSK;
FIG.19 is a diagram to explain a signal space diagram of star-16QAM;
FIG.20 is a diagram to explain a signal space diagram of 16PSK; and
FIG.21 is a diagram to explain a case of transmitting signals in 8PSK.

### Best Mode for Carrying Out the Invention

Embodiments of the present invention will be described below specifically with reference to accompanying drawings.

### (First embodiment)

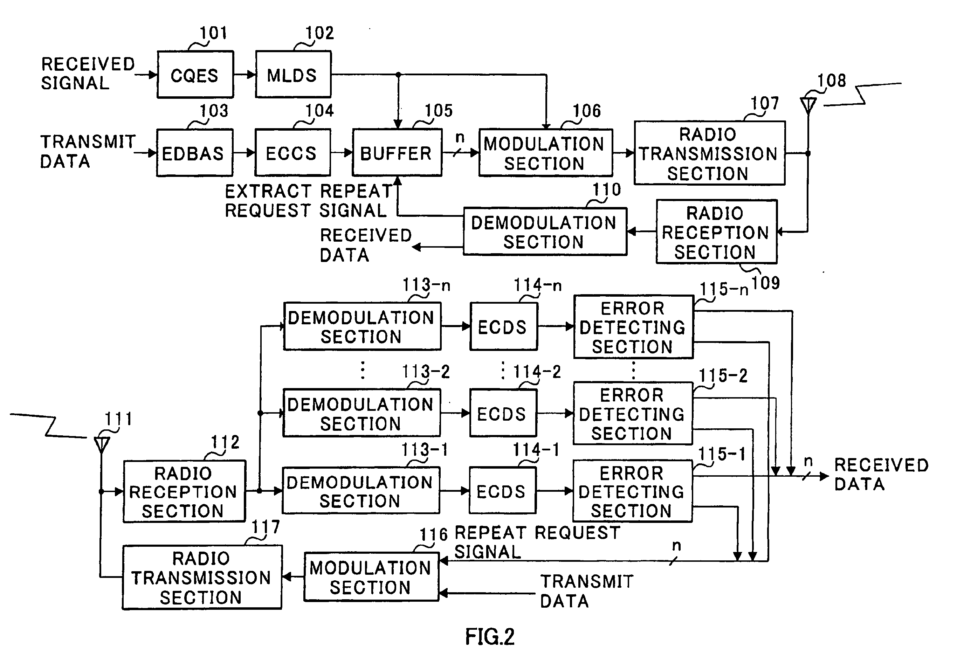

FIG.2 is a block diagram illustrating a configuration of an adaptive modulation communication system according to the embodiments of the present invention.

In the adaptive modulation communication system illustrated in FIG.2, CQES(channel quality estimating section) 101 in a transmitting-side apparatus estimates a channel quality using a received signal. The estimated channel quality information is output to MLDS(modulation level determining section) 102. MLDS 102 determines a modulation level based on the channel quality information. For example, when the channel quality is good, MLDS 102 increases the modulation level, while decreasing the modulation level when the channel quality is poor. The information on the modulation level is output to buffer 105, while being output to modulation section 106.

Transmit data is output to EDBAS(error detecting bit adding section) 103, where an error detecting bit is added for each error detection unit. The transmit data with the error detecting bit added thereto is output to ECCS(error correcting coding section) 104 to undergo error correcting coding. The transmit data subjected to the error correcting coding is output to buffer 105 to be stored therein.

To buffer 105 is input the modulation level information output from MLDS 102. According to the modulation level information, the transmit data is output to modulation section 106 for each modulation unit of the determined modulation scheme.

Modulation section 106 modulates the transmit data, and outputs the modulated signal to radio transmission section 107. The transmit signal is subjected to the predetermined radio transmission processing (for example, D/A conversion and upconverting) in radio transmission section 107, and the resultant radio signal is transmitted to a receiving-side apparatus (communication party) via antenna 108.

The signal transmitted from the transmitting-side apparatus is received in radio reception section 112 via antenna 111 in the receiving-side apparatus. Radio reception section 112 performs the predetermined radio reception processing (for example, downconverting and A/D conversion) on the received signal.

The signal subjected to the radio reception processing is output to demodulation sections 113-1 to 113-n for each predetermined unit

Then, demodulation sections 113-1 to 113-n demodulate signals for each predetermined unit according to respective demodulation patterns.

The demodulated data is output to ECDS(error correcting decoding sections) 114-1 to 114-n respectively to undergo error correcting decoding. Then, the error-correcting-decoded data is output to error detecting sections 115-1 to 115-n respectively to undergo error detection. Outputs of error detecting sections 115-1 to 115-n are received data. Further, a detection result (a result when an error is detected) in each of error detecting sections 115-1 to 115-n is output to modulation section 116 as a repeat request signal.

Modulation section 116 modulates the repeat request signal as well as the transmit data. The modulated signal is output to radio transmission section 117. Radio transmission section 117 performs the predetermined radio transmission processing on the modulated signal. The signal subjected to the radio transmission processing is transmitted to the transmitting-side apparatus (communication party) via antenna 111.

The signal including the repeat request signal is received in radio reception section 109 via antenna 108. Radio reception section 109 performs the predetermined radio reception processing on the received signal. The signal subjected to the radio reception processing is output to demodulation section 110. Demodulation section 110 demodulates the data and repeat request signal. The data becomes received data, and the repeat request signal is output to buffer 105. According to the repeat request signal, buffer 105 outputs data targeted for the repeat to modulation section 106.

The operation in the adaptive modulation communication system with the above configuration will be described below. The transmitting-side apparatus divides transmit data into predetermined units, and adds an error detecting bit such as CRC (Cyclic Redundancy Check) for each unit in EDBAS 103.

At this point, the number of units of a predetermined unit is made different corresponding to modulation scheme in performing M-ary modulation. For example, in BPSK one unit is set as a transmit unit in a slot, in QPSK two units are set as a transmit unit in a slot, in 8QAM three units are set as a transmit unit in a slot, in 16QAM four units are set as a transmit unit in a slot, in 32QAM five units are set as a transmit unit in a slot, in 64QAM six units are set as a transmit unit in a slot, and the transmit unit is concurrently transmitted. Each unit is capable of undergoing error detection independently. In this way, it is possible to perform the error correction and error detection only once, and a difference in transmit rate corresponding to modulation scheme can be represented by the number of units transmitted concurrently, thereby facilitating resource allocation in performing M-ary modulation.

It may be possible to set as the unit a signal bit, or two bits or more. For example, 64QAM is set for six units in a slot, and one bit may be set as one unit, or two or more bits are set as one unit. Specifically, it may be possible to with two bits set as one unit, set a unit as a transmit unit in QPSK, set two units as a transmit unit in 16QAM, and set three units as a transmit unit in 64QAM, to transmit concurrently. In this way, it is possible to readily perform resource allocation in performing M-ary modulation, using less candidates.

The transmit data with the error detecting bit added as described above is subjected to the predetermined error correcting coding in ECCS 104, and the coded signal is output to buffer 105. To buffer 105 is input the information on the modulation level determined from the channel quality estimated based on the received signal. Based on the information on the modulation level, buffer 105 outputs the transmit data for each transmit unit of the determined modulation scheme to modulation section 106.

The transmit data is modulated in modulation section 106, the modulated signal is subjected to the predetermined radio transmission processing in radio transmission section 107, the radio signal is transmitted to the receiving-side apparatus (communication party) from antenna 108.

In the receiving-side apparatus, data is output to demodulation sections 113-1 to 113-n for each unit set in the transmitting-side apparatus, and demodulation sections 113-1 to 113-n demodulate the data according to respective demodulation patterns.

It is herein assumed that the transmitting-side apparatus determines 64QAM as the modulation scheme, sets one unit at one bit, and transmits six units as a transmit unit, in other words, that the apparatus adds an error detecting bit for each error detection unit and transmits six bits as a transmit unit.

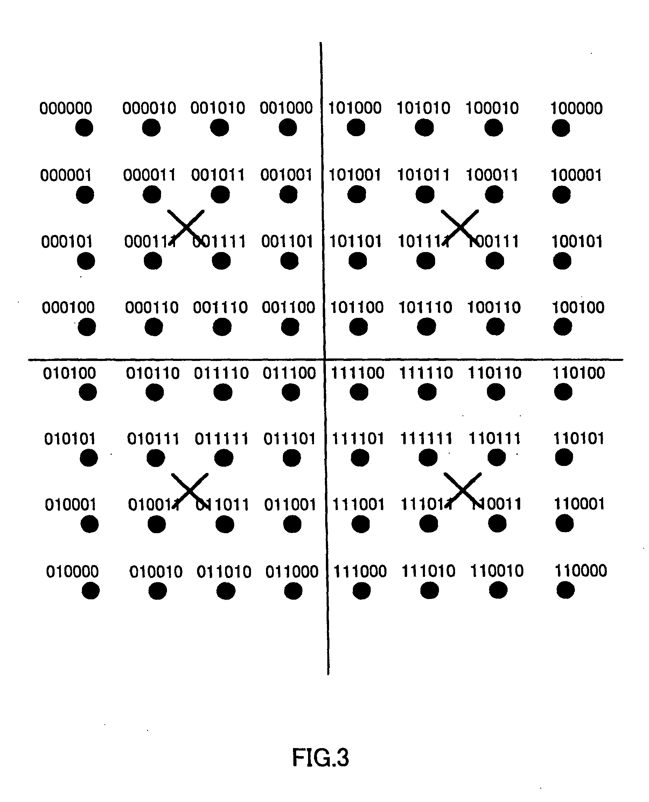

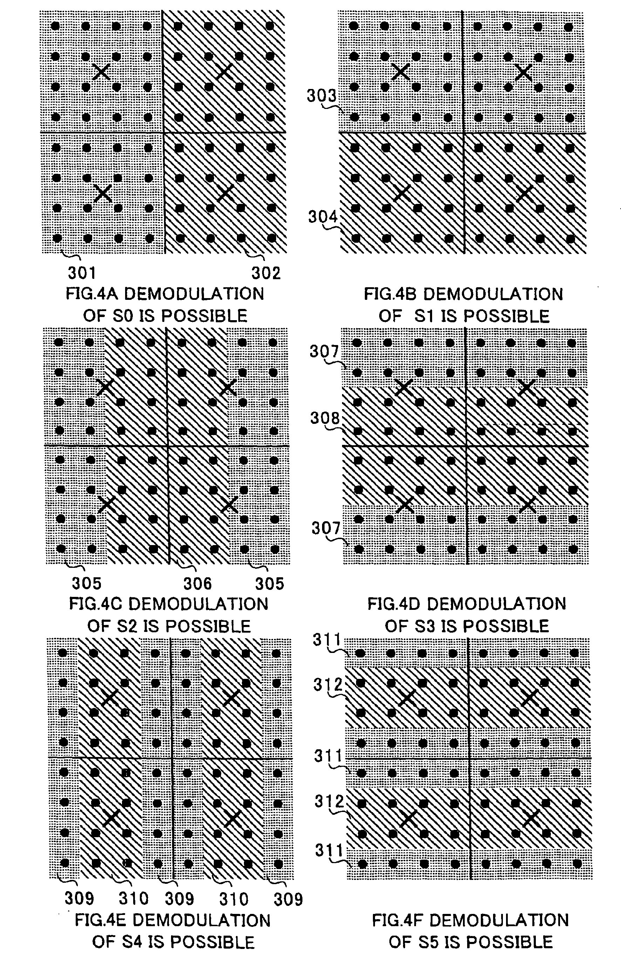

FIG.3 is a diagram to explain a signal space diagram of 64QAM. FIG.4 is a diagram to explain a demodulation method for 64QAM in the adaptive modulation communication system of the present invention. In FIG.3, with respect to the most significant bit (bit at the leftmost as viewed in the figure) S0, such bits are "0" at the left side of the vertical axis (Q-axis), while being "1" at the right side of the vertical axis. Accordingly, as shown in FIG.4A, S0 is capable of being demodulated according to a demodulation pattern comprised of a portion 301 at the left side of the vertical axis and a portion 302 at the right side of the vertical axis. In other words, it is possible to demodulate such bits in the portion 301 at the left side of the vertical axis to "0", while demodulating such bits in the portion 302 at the right side of the vertical axis to "1".

In FIG.3, with respect to a second significant bit (bit at the second left as viewed in the figure) S1, such bits are "0" at the upper side of the horizontal axis (I-axis), while being "1" at the lower side of the horizontal axis. Accordingly, as shown in FIG.4B, S1 is capable of being demodulated according to a demodulation pattern comprised of a portion 303 at the upper side of the horizontal axis and a portion 304 at the lower side of the horizontal axis. In other words, it is possible to demodulate such bits in the portion 303 at the upper side of the horizontal axis to "0", while demodulating such bits in the portion 304 at the lower side of the horizontal axis to "1".

In FIG.3, with respect to a third significant bit (bit at the third left as viewed in the figure) S2, such bits are "0" at the sides, opposed to the vertical axis (Q-axis), of axes (existing at the midpoint of signal points in the horizontal direction) spaced equal horizontal distances apart from the vertical axis, while being "1" at the center portion including the vertical axis. Accordingly, as shown in FIG.4C, S2 is capable of being demodulated according to a demodulation pattern comprised of portions 305 at the sides, opposed to the vertical axis, of axes spaced equal horizontal distances apart from the vertical axis and a portion 306 at the center including the vertical axis. In other words, it is possible to demodulate such bits in the portions 305 at the sides, opposed to the vertical axis, of axes spaced equal horizontal distances apart from the vertical axis to "0", while demodulating such bits in the portion 306 at the center including the vertical axis to "1".

In FIG.3, with respect to a fourth significant bit (bit at the fourth left as viewed in the figure) S3, such bits are "0" at the sides, opposed to the horizontal axis (I-axis), of axes (existing at the midpoint of signal points in the vertical direction) spaced equal vertical distances apart from the horizontal axis, while being "1" at the center portion including the horizontal axis. Accordingly, as shown in FIG.4D, S3 is capable of being demodulated according to a demodulation pattern comprised of portions 307 at the sides, opposed to the horizontal axis, of axes spaced equal vertical distances apart from the horizontal axis and a portion 308 at the center including the horizontal axis. In other words, it is possible to demodulate such bits in the portions 307 at the sides, opposed to the horizontal axis, of axes spaced equal vertical distances apart from the horizontal axis to "0", while demodulating such bits in the portion 308 at the center including the horizontal axis to "1".

In FIG.3, with respect to a fifth significant bit (bit at the fifth left as viewed in the figure) S4, such bits are "0" at a first portion, including the vertical axis (Q-axis), between axes spaced equal horizontal distances apart from the vertical axis, are "1" at second portions, with the same horizontal width as the first portion, at opposite sides of the first portion, and are "0" at third portions outside the second portions. Accordingly, as shown in FIG.4E, S4 is capable of being demodulated according to a demodulation pattern comprised of the first portion 309, including the vertical axis, between axes spaced equal horizontal distances apart from the vertical axis, the second portions 310, with the same horizontal width as the first portion 309, at opposite sides of the first portion, and the third portions 309 outside the second portions 310. In other words, it is possible to demodulate such bits to "0" in the first portion 309, including the vertical axis, between axes spaced equal horizontal distances apart from the vertical axis, such bits to "1" in the second portions 310, with the same horizontal width as the first portion 309, at opposite sides of the first portion, and such bits to "0" in the third portions 309 outside the second portions 310.

In FIG.3, with respect to a least significant bit (bit at the sixth left as viewed in the figure) S5, such bits are "0" at a first portion, including the horizontal axis (I-axis), between axes spaced equal vertical distances apart from the horizontal axis, are "1" at second portions , with the same vertical width as the first portion, at opposite sides of the first portion, and are "0" at third portions outside the second portions. Accordingly, as shown in FIG.4F, S5 is capable of being demodulated according to a demodulation pattern comprised of the first portion 311, including the horizontal axis, between axes spaced equal vertical distances apart from the horizontal axis, the second portions 312, with the same vertical width as the first portion 311, at opposite sides of the first portion, and the third portions 311 outside the second portions 312. In other words, it is possible to demodulate such bits to "0" in the first portion 311, including the horizontal axis, between axes spaced equal vertical distances apart from the horizontal axis, such bits to "1" in the second portions 312, with the same vertical width as the first portion 311, at opposite sides of the first portion, and such bits to "0" in the third portions 311 outside the second portions 312.

Thus, demodulation sections 113-1 to 113-n demodulate data according to the above-mentioned respective demodulation patterns. It is thereby possible to perform demodulation in 64QAM without using information on the modulation scheme (modulation level broadcast signal).

The demodulation using demodulation sections 113-1 to 113-n will be described below when 16QAM data is transmitted from the transmitting-side apparatus.

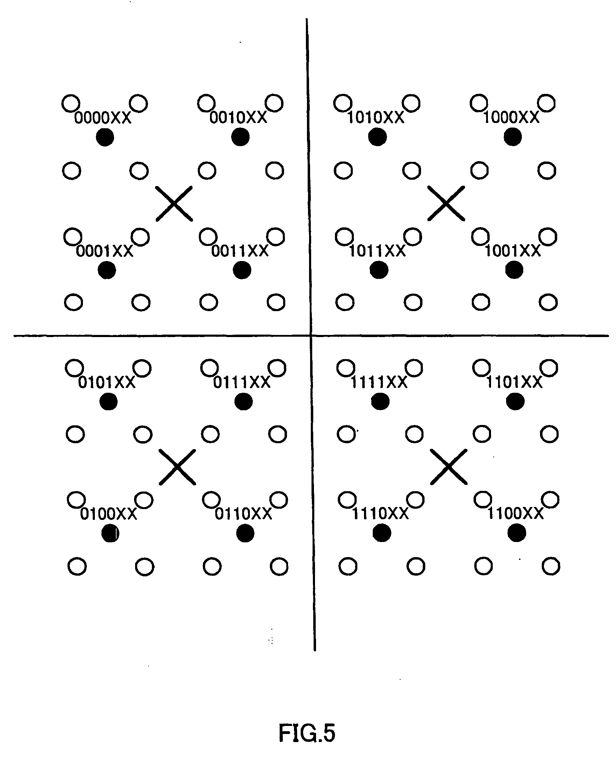

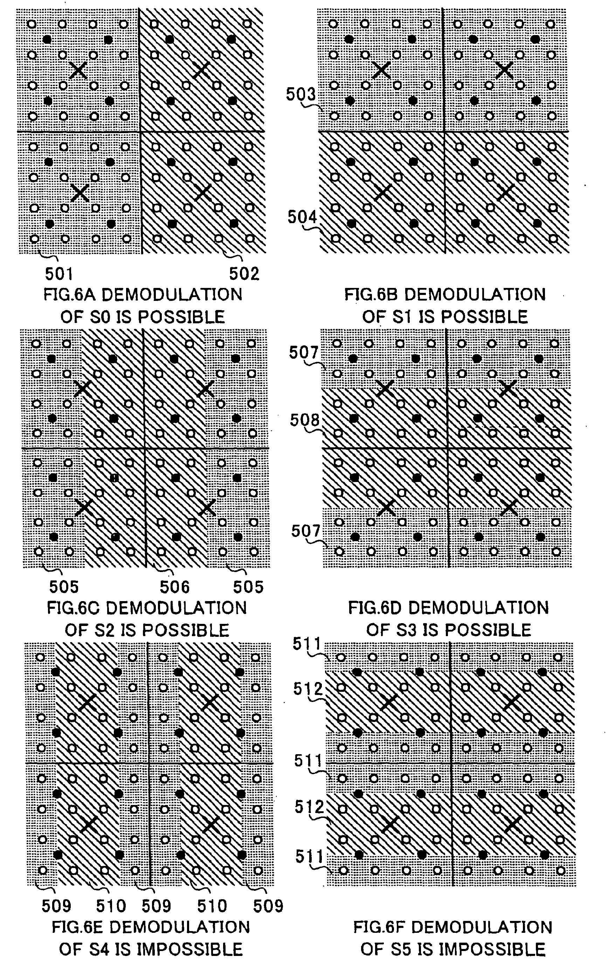

FIG.5 is a diagram to explain a signal space diagram of 16QAM. FIG.6 is a diagram to explain a demodulation method for 16QAM in the adaptive modulation communication system of the present invention. In FIG.5, black points indicate 16QAM signal points, and white points indicate 64QAM signal points.

In FIG.5, with respect to a most significant bit (bit at the leftmost as viewed in the figure) S0, such bits are "0" at the left side of the vertical axis (Q-axis), while being "1" at the right of the vertical axis. Accordingly, as shown in FIG.6A, S0 is capable of being demodulated according to a demodulation pattern comprised of a portion 501 at the left side of the vertical axis and a portion 502 at the right side of the vertical axis. In other words, it is possible to demodulate such bits in the portion 501 at the left side of the vertical axis to "0", while demodulating such bits in the portion 502 at the right side of the vertical axis to "1".

In FIG.5, with respect to a second significant bit (bit at the second left as viewed in the figure) S1, such bits are "0" at the upper side of the horizontal axis (I-axis), while being "1" at the lower side of the horizontal axis. Accordingly, as shown in FIG.6B, S1 is capable of being demodulated according to a demodulation pattern comprised of a portion 503 at the upper side of the horizontal axis and a portion 504 at the lower side of the horizontal axis. In other words, it is possible to demodulate such bits in the portion 503 at the upper side of the horizontal axis to "0", while demodulating such bits in the portion 504 at the lower side of the horizontal axis to "1".

In FIG.5, with respect to a third significant bit (bit at the third left as viewed in the figure) S2, such bits are "0" at the sides, opposed to the vertical axis (Q-axis), of axes (existing at the midpoint of signal points in the horizontal direction) spaced equal horizontal distances apart from the vertical axis, while being "1" at the center portion including the vertical axis. Accordingly, as shown in FIG.6C, S2 is capable of being demodulated according to a demodulation pattern comprised of portions 505 at the sides, opposed to the vertical axis, of axes spaced equal horizontal distances apart from the vertical axis and a portion 506 at the center including the vertical axis. In other words, it is possible to demodulate such bits in the portions 505 at the sides, opposed to the vertical axis, of axes spaced equal horizontal distances apart from the vertical axis to "0", while demodulating such bits in the portion 506 at the center including the vertical axis to "1".

In FIG.5, with respect to a fourth significant bit (bit at the fourth left as viewed in the figure) S3, such bits are "0" at the sides, opposed to the horizontal axis (I-axis), of axes (existing at the midpoint of signal points in the vertical direction) spaced equal vertical distances apart from the horizontal axis, while being "1" at the center portion including the horizontal axis. Accordingly, as shown in FIG.6D, S3 is capable of being demodulated according to a demodulation pattern comprised of portions 507 at the sides, opposed to the horizontal axis, of axes spaced equal vertical distances apart from the horizontal axis and a portion 508 at the center including the horizontal axis. In other words, it is possible to demodulate such bits in the portions 507 at the sides, opposed to the horizontal axis, of axes spaced equal vertical distances apart from the horizontal axis to "0", while demodulating such bits in the portion 508 at the center including the horizontal axis to "1".

That is, S0 to S3 are capable of being demodulated in the same way as in 64QAM using demodulation patterns of 64QAM. It is thereby possible to perform the demodulation in 16QAM also without using the information on the modulation scheme (modulation level broadcast signal).

In addition, with respect to outputs of demodulation sections that demodulate S4 and S5 in the demodulation in 64QAM, since corresponding data does not exist originally, portions 509 to 512 illustrated in FIGs.6E and 6F cannot be used, and errors are detected in error detecting sections corresponding to the demodulation sections. Then with respect to S4 and S5, repeat is requested. The repeat will be described later.

The demodulation using demodulation sections 113-1 to 113-n will be described below when QPSK data is transmitted from the transmitting-side apparatus.

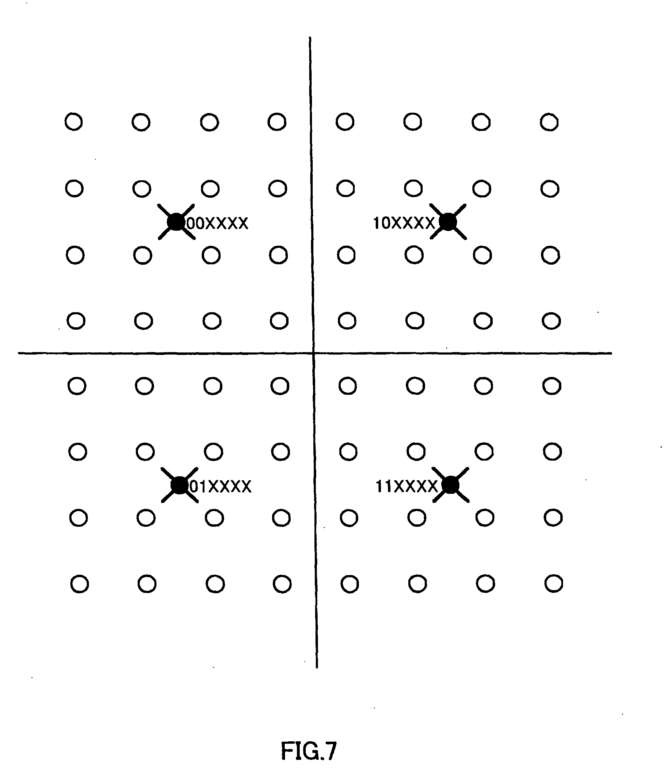

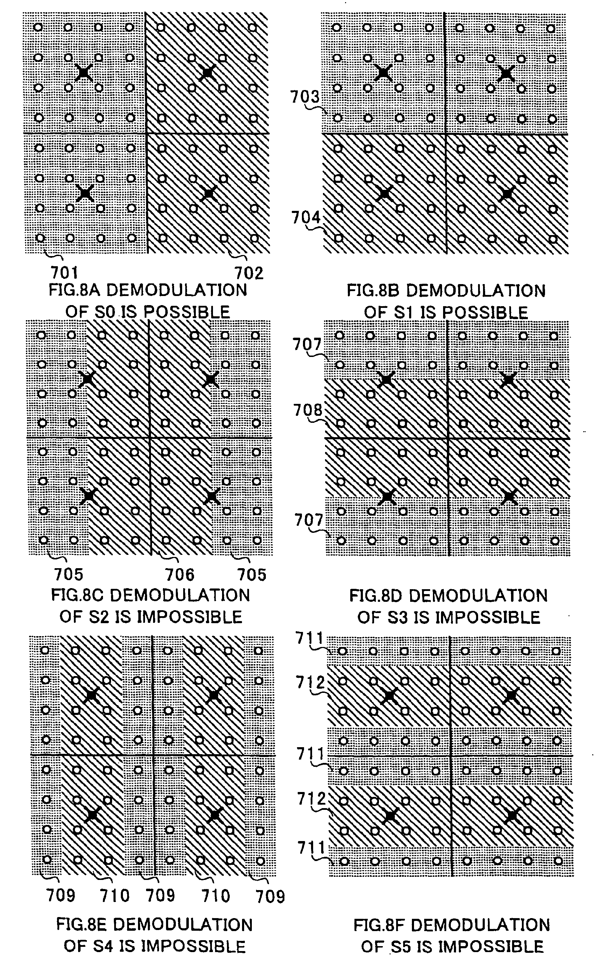

FIG.7 is a diagram to explain a signal space diagram of QPSK. FIG.8 is a diagram to explain a demodulation method for QPSK in the adaptive modulation communication system of the present invention. In FIG.7, black points indicate QPSK signal points, and white points indicate 64QAM signal points.

In FIG.7, with respect to a most significant bit (bit at the leftmost as viewed in the figure) S0, such bits are "0" at the left side of the vertical axis (Q-axis), while being "1" at the right side of the vertical axis. Accordingly, as shown in FIG.8A, S0 is capable of being demodulated according to a demodulation pattern comprised of a portion 701 at the left side of the vertical axis and a portion 702 at the right side of the vertical axis. In other words, it is possible to demodulate such bits in the portion 701 at the left side of the vertical axis to "0", while demodulating such bits in the portion 702 at the right side of the vertical axis to "1".

In FIG.7, with respect to a second significant bit (bit at the second left as viewed in the figure) S1, such bits are "0" at the upper side of the horizontal axis (I-axis), while being "1" at the lower side of the horizontal axis. Accordingly, as shown in FIG.8B, S1 is capable of being demodulated according to a demodulation pattern comprised of a portion 703 at the upper side of the horizontal axis and a portion 704 at the lower side of the horizontal axis. In other words, it is possible to demodulate such bits in the portion 703 at the upper side of the horizontal axis to "0", while demodulating such bits in the portion 704 at the lower side of the horizontal axis to "1".

That is, S0 and S1 are capable of being demodulated in the same way as in 64QAM using demodulation patterns of 64QAM. It is thereby possible to perform the demodulation in QPSK also without using the information on the modulation scheme (modulation level broadcast signal).

In addition, with respect to outputs of demodulation sections that demodulate S2 to S5 in the demodulation in 64QAM, since corresponding data does not exist originally, portions 705 to 712 illustrated in FIGs.8C to 8F cannot be used, and errors are detected in error detecting sections corresponding to the demodulation sections. Then with respect to S2 to S5, repeat is requested. The repeat will be described later.

The repeat will be described below in the case where the receiving-side apparatus detects an error in the error detecting section. Two types of repeats are considered in the adaptive modulation communication system of the present invention, i.e., the case of repeat due to a general error and the case of repeat occurring when demodulating data modulated by smaller modulation level than the largest modulation level allowing the demodulation. The repeat due to a general error is performed by when an error is detected in the error detecting section, transmitting a repeat request signal for instructing to repeat the erroneous transmit unit to the transmitting-side apparatus. The transmitting-side apparatus repeats the data of the transmit unit to be repeated according to the repeat request signal.

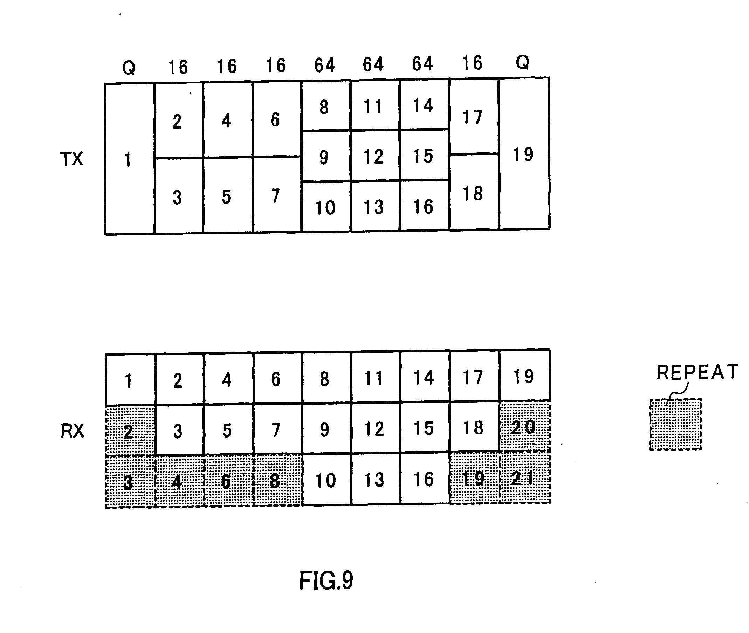

With reference to FIG.9, the repeat will be described below which is specific in the adaptive modulation communication system of the present invention and which occurs when demodulating data modulated by smaller modulation level than the largest modulation level allowing the demodulation.

FIG.9 illustrates a case where the transmitting-side apparatus transmits data #1 to #19 while switching between modulation schemes of QPSK, 16QAM, and 64QAM for each transmission unit. In FIG.9, "Q" denotes QPSK, "16" denotes 16QAM, and "64" denotes 64QAM. In addition, in data #1 to #19, two bits indicate one unit, in QPSK one unit is set as a transmit unit, in 16QAM two units are set as a transmit unit, and in 64QAM three units are set as a transmit unit. Further, an error detecting bit is added for each unit. In addition, it is assumed that the receiving-side apparatus is provided with demodulation sections corresponding to 64QAM (allowing up to three units as a transmit unit).

When thetransmitting-side apparatus (Tx) transmits data #1 by QPSK in a first transmit unit, the receiving-side apparatus (Rx) demodulates data #1 as described above. At this point, the receiving-side apparatus detects data #2 and #3 as errors as described above. Then, the receiving-side apparatus transmits a repeat request signal for instructing to repeat data #2 and #3 to the transmitting-side apparatus. In the transmitting-side apparatus,since datato be transmitted next is data #2, transmission is performed starting from data #2 without any change.

When the transmitting-side apparatus transmits data #2 and #3 by 16QAM in a next transmit unit, the receiving-side apparatus (Rx) demodulates data #2 and #3 as described above. At this point, the receiving-side apparatus detects data #4 as an error as described above. Then, the receiving-side apparatus transmits a repeat request signal for instructing to repeat data #4 to the transmitting-side apparatus. In the transmitting-side apparatus, since data to be transmitted next is data #4, and transmission is performed starting from data #4 without any change.

Thus, even when a repeat request occurs when demodulating data modulated by smaller modulation level than the largest modulation level allowing the demodulation, it is possible for the transmitting-side apparatus to transmit data without performing any additional processing.

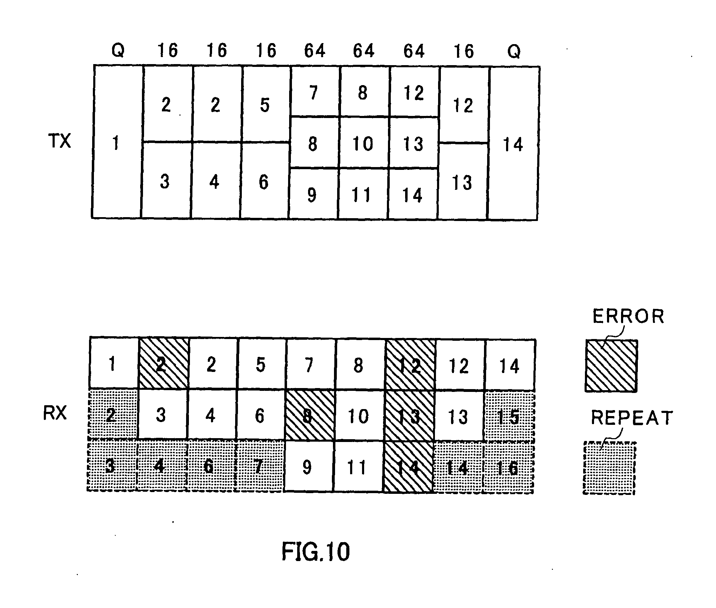

With reference to FIG.10, a case will be described below where both repeats occur, i.e., a repeat caused by demodulating data modulated by smaller modulation level than the largest modulation level allowing the demodulation, and a general repeat.

FIG.10 illustrates a case where the transmitting-side apparatus transmits data #1 to #16 while switching between modulation schemes of QPSK, 16QAM, and 64QAM for each transmit unit. In FIG.10, "Q" denotes QPSK, "16" denotes 16QAM, and "64" denotes 64QAM. In addition, in data #1 to #16, two bits indicate one unit, in QPSK one unit is set as a transmit unit, in 16QAM two units are set as a transmit unit, and in 64QAM three units are set as a transmit unit. Further, an error detecting bit is added for each unit. In addition, it is assumed that the receiving-side apparatus is provided with demodulation sections corresponding to 64QAM (allowing up to three units as a transmit unit).

When the transmitting-side apparatus (Tx) transmits data #1 by QPSK in a first transmit unit, the receiving-side apparatus (Rx) demodulates data #1 as described above. At this point, the receiving-side apparatus detects data #2 and #3 as errors as described above. Then, the receiving-side apparatus transmits a repeat request signal for instructing to repeat data #2 and #3 to the transmitting-side apparatus. In the transmitting-side apparatus,since data to be transmitted next is data #2, transmission is performed starting from data #2 without any change.

When the transmitting-side apparatus transmits data #2 and #3 by 16QAM in a next transmit unit, it is assumed that the receiving-side apparatus (Rx) demodulates data #3 as described above and that data #2 is erroneous. At this point, the receiving-side apparatus detects data #2 and #4 as errors as described above. Then, the receiving-side apparatus transmits a repeat request signal for instructing to repeat data #2 and #4 to the transmitting-side apparatus. In the transmitting-side apparatus, since data to be transmitted is data #4, transmission is performed starting from data #4 along with data #2 having provided the error.

When the transmitting-side apparatus transmits data #7 to #9 by 64QAM in a fifth transmit unit, it is assumed that the receiving-side apparatus (Rx) demodulates data #7 and #9 as described above and that data #8 is erroneous. At this point, the receiving-side apparatus detects data #8 as an error. Then, the receiving-side apparatus transmits a repeat request signal for instructing to repeat data #8 to the transmitting-side apparatus. In the transmitting-side apparatus, since data to be transmitted next is data #10, transmission is performed starting from data #10 along with data #8 having provided the error.

Thus, even when a repeat request occurs when demodulating data modulated by smaller modulation level then the largest modulation level allowing the demodulation, it is possible for the transmitting-side apparatus to transmit data without performing any additional processing. Further, it is possible to deal with general repeat requests in the same way as in the conventional method.

According to this embodiment, even when the transmitting-side apparatus transmits data using either modulation scheme among the modulation schemes of 64QAM to QPSK, the receiving-side apparatus is capable of demodulating the data by a demodulation scheme corresponding to the same modulation method. In other words, when the transmitting-side apparatus transmits data while modulating the data by smaller modulation level than the largest modulation level allowing the demodulation on a demodulation side, it is possible to accurately demodulate data of units actually transmitted. It is thereby possible for the receiving-side apparatus to demodulate all transmitted data without knowing (being aware at all) a modulation scheme of the transmitting-side apparatus.

As a result, the need is eliminated of notifying a modulation scheme (modulation level broadcast signal) from a transmitting-side apparatus to a receiving-side apparatus, and it is thereby possible to use downlink resource effectively. Further, since the need is eliminated of notifying a modulation scheme from a transmitting-side apparatus to a receiving-side apparatus, it is possible to reduce the time during which a modulation level broadcast signal is demodulated and then data is demodulated like the conventional method, and to decrease data delay. Further, it is possible to shorten delay of repeat request.

Moreover, in the adaptive modulation communication system according to this embodiment, even when transmission is not performed, data transmission success indicates 0 unit, thereby enabling the detection.

In order to facilitate the adaptive modulation communication system according to this embodiment, arrangements of pilot signals in a signal space diagram are set as illustrated in FIGs.3, 5 and 7. For example, when the largest modulation level is set at 64, as shown in FIGs.3 and 5, pilot signals are assigned respective amplitude and phase of positions (denoted by X in the figure) with the amplitude half the maximum amplitude in the signal space diagram of the largest modulation level scheme. It is thereby possible to share pilot signals in either modulation scheme, and to receive the pilot signals similarly in either modulation scheme.

Further, with respect to the arrangement of pilot signals, in the signal space diagram of the largest modulation level scheme, a pilot point is set to a sum of a value of a middle point having amplitude half the maximum amplitude and a predetermined phase rotation, or to a value predetermined times a value of a middle point having amplitude half the maximum amplitude. In this way, in the same way as described above, it is possible to share pilot signals in either modulation scheme, and to receive the pilot signals similarly in either modulation scheme. Further, since it is possible to provide the arrangement of pilot signals with versatility, frame format can be determined readily. In addition, in a modulation scheme that does not provide amplitude with information such as QPSK, since the amplitude of a pilot signal is not restricted, pilot signals can be set with more versatility.

### (Second embodiment)

This embodiment describes a case of applying to modulation schemes where a square root of the number of total signal points is not an integer, for example, 32QAM, 8QAM, and BPSK.

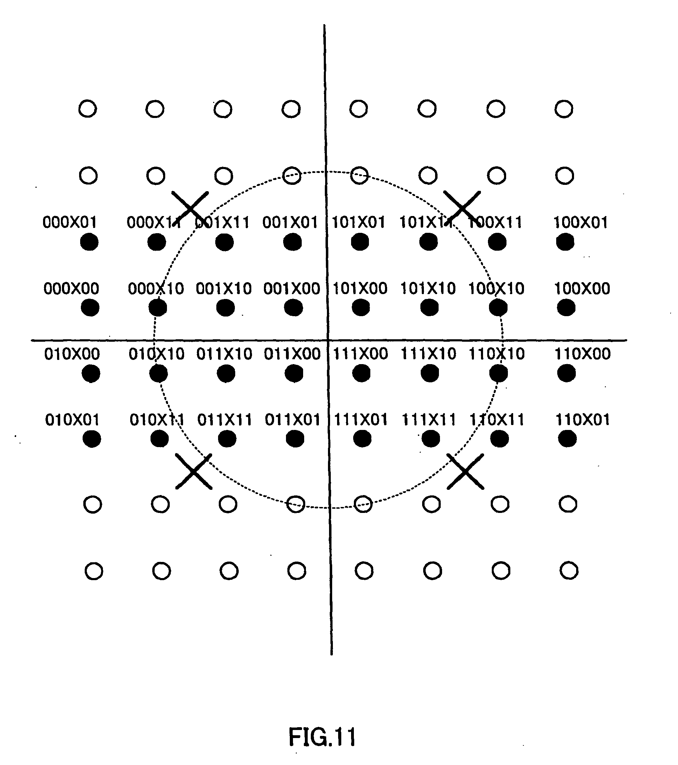

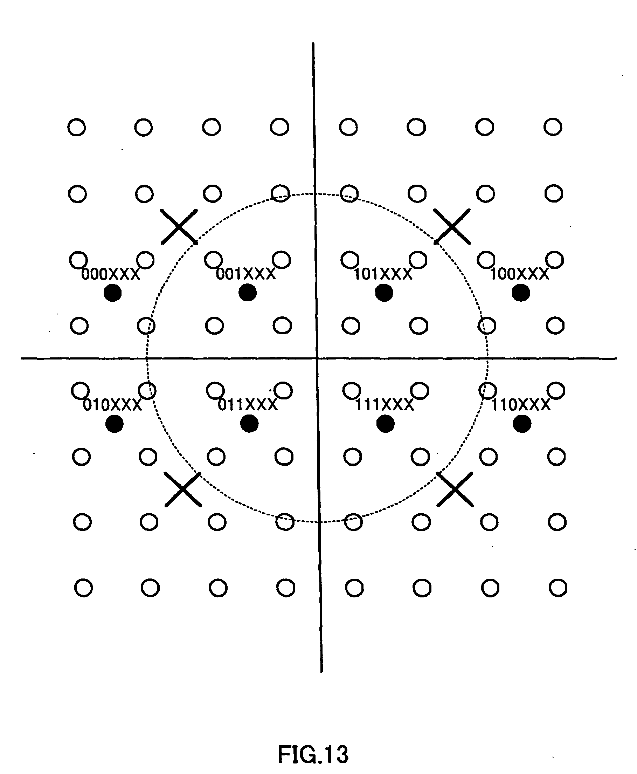

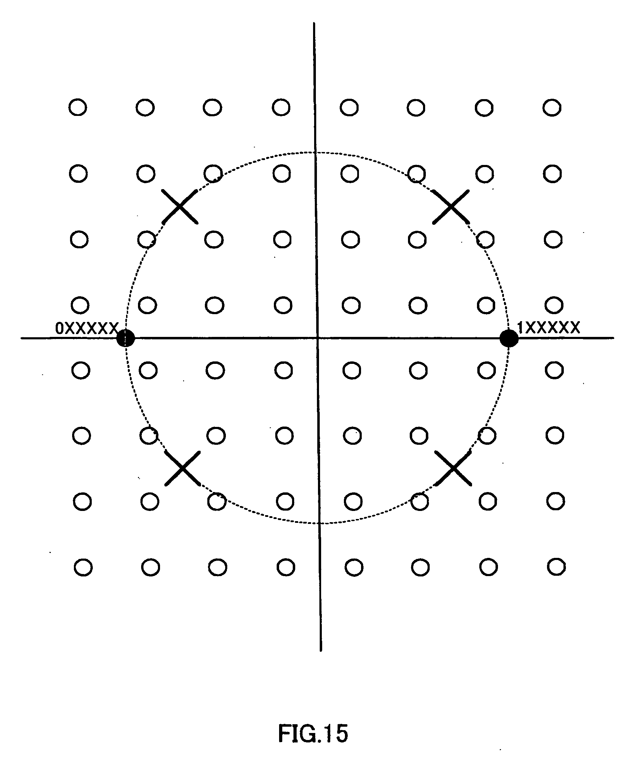

Generally, in such modulation schemes, as illustrated by broken line in FIGs.11, 13 and 15, signal points are arranged in the form of a circle. In an adaptive modulation communication system according to this embodiment, the signal point arrangement in 32QAM is set as illustrated in FIG.11 with eight points in the I(in-phase)-axis direction and with four points in the Q(quadrature)-axis direction. The signal point arrangement in 8QAM is set as illustrated in FIG.13 with four points in the I-axis direction and with two points in the Q-axis direction. The signal point arrangement in BPSK is set as illustrated in FIG.15 with two points in the I-axis direction. In other words, the number of signal points in the I-axis direction is made different from the number of signal points in the Q-axis direction. In this case, in order to arrange signal points efficiently, the number of points arranged in the same axis direction is set at a number close to a square root of the total signal points as much as possible. For example, in 8QAM, four signal points are arranged in the I-axis direction, while two signal points are arranged in the Q-axis direction, instead of arranging eight signal points in the I-axis direction, while arranging one signal point in the Q-axis direction. Similarly, in 32QAM, eight signal points are arranged in the I-axis direction, while four signal points are arranged in the Q-axis direction. In addition, the number of signal points in the I-axis direction is either more or less than the number of signal points in the Q-axis direction.

The operation of the adaptive modulation communication system according to this embodiment will be described below. The operation of the transmitting-side apparatus is the same as in the first embodiment, and is omitted. The demodulation in demodulation sections will be described in the case where the transmitting-side apparatus transmits data modulated by an M-ary modulation scheme where a square root of the number of total signal points is not an integer. Also in this case, for each error detecting unit, demodulation is performed independently, and error detection is performed independently. It is thereby possible to accurately transmit data of unit(s) corresponding to the modulation level.

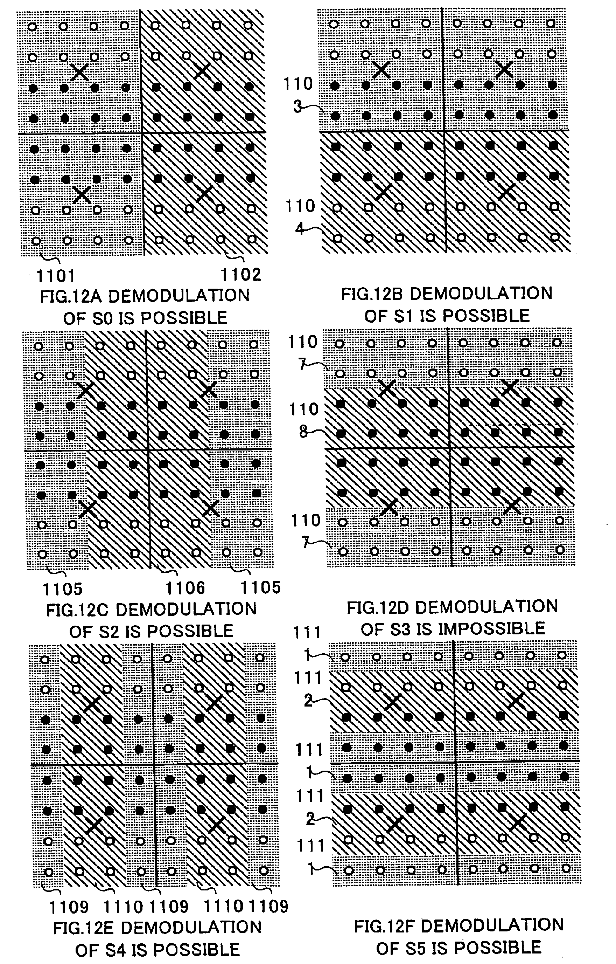

FIG.11 is a diagram to explain a signal space diagram of 32QAM. FIG.12 is a diagram to explain a demodulation method for 32QAM in the adaptive modulation communication system of the present invention. In FIG.11, black points indicate signal points of 32QAM, and white points indicate signal points of 64QAM.

In FIG.11, with respect to a most significant bit (bit at the leftmost as viewed in the figure) S0, such bits are "0" at the left side of the vertical axis (Q-axis), while being "1" at the right side of the vertical axis. Accordingly, as shown in FIG.12A, S0 is capable of being demodulated according to a demodulation pattern comprised of a portion 1101 at the left side of the vertical axis and a portion 1102 at the right side of the vertical axis. In other words, it is possible to demodulate such bits in the portion 1101 at the left side of the vertical axis to "0", while demodulating such bits in the portion 1102 at the right side of the vertical axis to "1".

In FIG.11, with respect to a second significant bit (bit at the second left as viewed in the figure) S1, such bits are "0" at the upper side of the horizontal axis (I-axis), while being "1" at the lower side of the horizontal axis. Accordingly, as shown in FIG.12B, S1 is capable of being demodulated according to a demodulation pattern comprised of a portion 1103 at the upper side of the horizontal axis and a portion 1104 at the lower side of the horizontal axis. In other words, it is possible to demodulate such bits in the portion 1103 at the upper side of the horizontal axis to "0", while demodulating such bits in the portion 1104 at the lower side of the horizontal axis to "1".

In FIG.11, with respect to a third significant bit (bit at the third left as viewed in the figure) S2, such bits are "0" at the sides, opposed to the vertical axis (Q-axis), of axes (existing at the midpoint of signal points in the horizontal direction) spaced equal horizontal distances apart from the vertical axis, while being "1" at the center portion including the vertical axis. Accordingly, as shown in FIG.12C, S2 is capable of being demodulated according to a demodulation pattern comprised of portions 1105 at the sides, opposed to the vertical axis, of axes spaced equal horizontal distances apart from the vertical axis and a portion 1106 at the center including the vertical axis. In other words, it is possible to demodulate such bits in the portions 1105 at the sides, opposed to the vertical axis, of axes spaced equal horizontal distances apart from the vertical axis to "0", while demodulating such bits in the portion 1106 at the center including the vertical axis to "1".

In FIG.11, with respect to a fifth significant bit (bit at the fifth left as viewed in the figure) S4, such bits are "0" at a first portion, including the vertical axis (Q-axis), between axes spaced equal horizontal distances apart from the vertical axis, are "1" at second portions, with the same horizontal width as the first portion, at opposite sides of the first portion, and are "0" at third portions outside the second portions. Accordingly, as shown in FIG.12E, S4 is capable of being demodulated according to a demodulation pattern comprised of the first portion 1109, including the vertical axis, between axes spaced equal horizontal distances apart from the vertical axis, the second portions 1110, with the same horizontal width as the first portion 1109, at opposite sides of the first portion, and the third portions 1109 outside the second portions 1110. In other words, it is possible to demodulate such bits to "0" in the first portion 1109, including the vertical axis, between axes spaced equal horizontal distances apart from the vertical axis, such bits to "1" in the second portions 1110, with the same horizontal width as the first portion 1109, at opposite sides of the first portion, and such bits to "0" in the third portions 1109 outside the second portions 1110.

In FIG.11, with respect to a least significant bit (bit at the sixth left as viewed in the figure) S5, such bits are "0" at a first portion, including the horizontal axis (I-axis), between axes spaced equal vertical distances apart from the horizontal axis, are "1" at second portions, with the same vertical width as the first portion, at opposite sides of the first portion, and are "0" at third portions outside the second portions . Accordingly, as shown in FIG.12F, S5 is capable of being demodulated according to a demodulation pattern comprised of the first portion 1111, including the horizontal axis, between axes spaced equal vertical distances apart from the horizontal axis, the second portions 1112, with the same vertical width as the first portion 1111, at opposite sides of the first portion, and the third portions 1111 outside the second portions 1112. In other words, it is possible to demodulate such bits to "0" in the first portion 1111, including the horizontal axis, between axes spaced equal vertical distances apart from the horizontal axis, such bits to "1" in the second portions 1112, with the same vertical width as the first portion 1111, at opposite sides of the first portion, and such bits to "0" in the third portions 1111 outside the second portions 1112.

Thus, S0 to S2, S4 and S5 are capable of being demodulated in the same way as in 64QAM using demodulation patterns of 64QAM. In this way it is also possible to perform demodulation in 32QAM without using information on the modulation scheme (modulation level broadcast signal).

In addition, with respect to an output of the demodulation section that demodulates S3 in the demodulation in 64QAM, since corresponding data does not exist originally, portions 1107 and 1108 illustrated in FIG.12D cannot be used, and an error is detected in the error detecting section corresponding to the demodulation section. Then with respect to S3, repeat is requested. The repeat is performed as in the first embodiment.

The demodulation will be described below in the case where the transmitting-side apparatus transmits data of 8QAM.

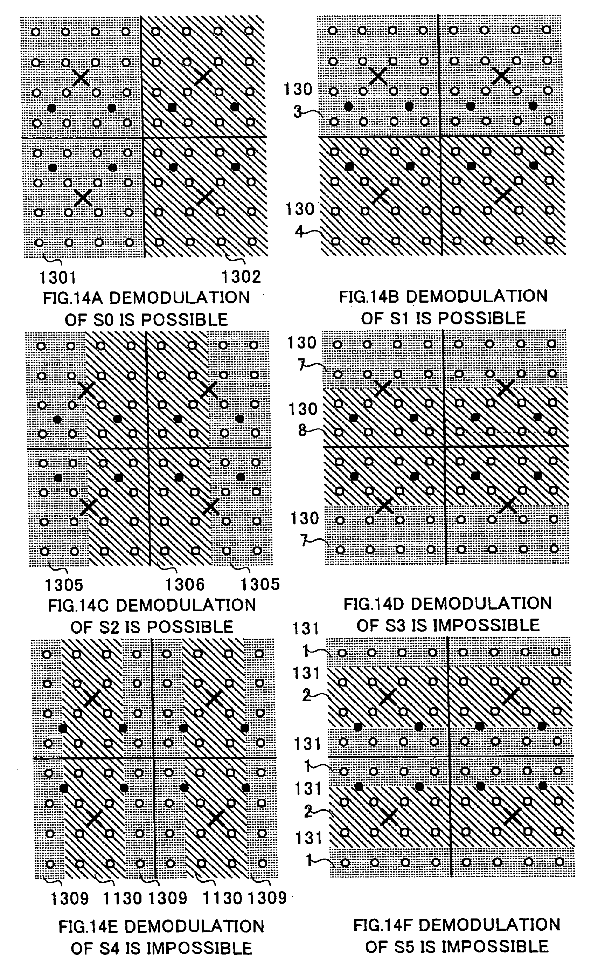

FIG.13 is a diagram to explain a signal space diagram of 8QAM. FIG.14 is a diagram to explain a demodulation method for 8QAM in the adaptive modulation communication system of the present invention. In FIG.13, black points indicate signal points of 8QAM, and white points indicate signal points of 64QAM.

In FIG.13, with respect to a most significant bit (bit at the leftmost as viewed in the figure) S0, such bits are "0" at the left side of the vertical axis (Q-axis), while being "1" at the right side of the vertical axis. Accordingly, as shown in FIG.14A, S0 is capable of being demodulated according to a demodulation pattern comprised of a portion 1301 at the left side of the vertical axis and a portion 1302 at the right side of the vertical axis. In other words, it is possible to demodulate such bits in the portion 1301 at the left side of the vertical axis to "0", while demodulating such bits in the portion 1302 at the right side of the vertical axis to "1".

In FIG.13, with respect to a second significant bit (bit at the second left as viewed in the figure) S1, such bits are "0" at the upper side of the horizontal axis (I-axis), while being "1" at the lower side of the horizontal axis. Accordingly, as shown in FIG.14B, S1 is capable of being demodulated according to a demodulation pattern comprised of a portion 1303 at the upper side of the horizontal axis and a portion 1304 at the lower side of the horizontal axis. In other words, it is possible to demodulate such bits in the portion 1303 at the upper side of the horizontal axis to "0", while demodulating such bits in the portion 1304 at the lower side of the horizontal axis to "1".

In FIG.13, with respect to a third significant bit (bit at the third left as viewed in the figure) S2, such bits are "0" at the sides, opposed to the vertical axis (Q-axis), of axes (existing at the midpoint of signal points in the horizontal direction) spaced equal horizontal distances apart from the vertical axis, while being "1" at the center portion including the vertical axis. Accordingly, as shown in FIG.14C, S2 is capable of being demodulated according to a demodulation pattern comprised of portions 1305 at the sides, opposed to the vertical axis, of axes spaced equal horizontal distances apart from the vertical axis and a portion 1306 at the center including the vertical axis. In other words, it is possible to demodulate such bits in the portions 1305 at the sides, opposed to the vertical axis, of axes spaced equal horizontal distances apart from the vertical axis to "0", while demodulating such bits in the portion 1306 at the center including the vertical axis to "1".

Thus, S0 to S2 are capable of being demodulated in the same way as in 64QAM using demodulation patterns of 64QAM. It is thereby possible to perform the demodulation in 8QAM also without using the information on the modulation scheme (modulation level broadcast signal).

In addition, with respect to outputs of the demodulation sections that demodulate S3 to S5 in the demodulation in 64QAM, since corresponding data does not exist originally, portions 1307 to 1312 illustrated in FIGs.14D to 14F cannot be used, and errors are detected in error detecting sections corresponding to the demodulation sections. Then with respect to S3 to S5, repeat is requested. The repeat is performed as in the first embodiment.

The demodulation will be described below in the case where the transmitting-side apparatus transmits data of BPSK.

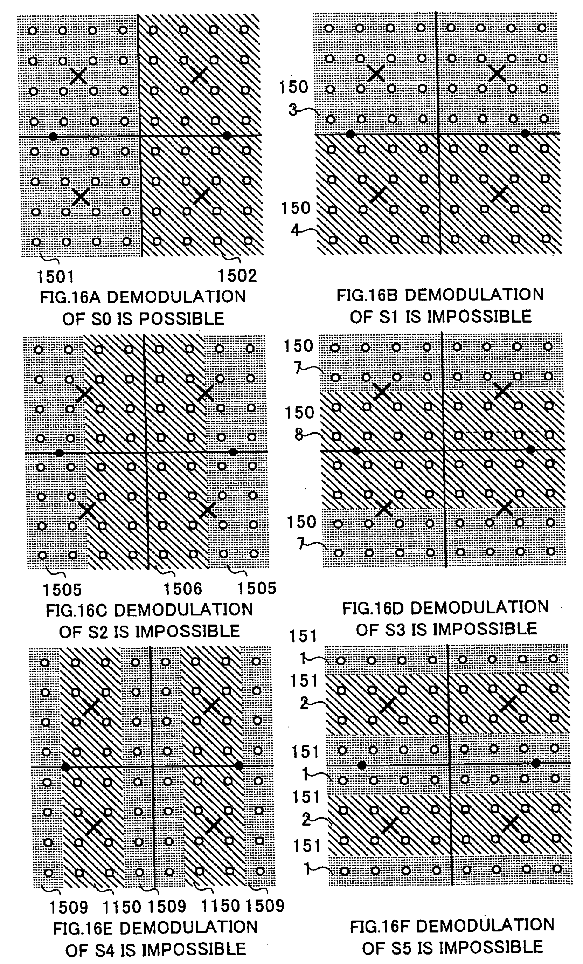

FIG.15 is a diagram to explain a signal space diagram of BPSK. FIG.16 is a diagram to explain a demodulation method for BPSK in the adaptive modulation communication system of the present invention. In FIG.15, black points indicate signal points of BPSK, and white points indicate signal points of 64QAM.

In FIG.15, with respect to a most significant bit (bit at the leftmost as viewed in the figure) S0, such a bit is "0" at the left side of the vertical axis (Q-axis), while being "1" at the right side of the vertical axis. Accordingly, as shown in FIG.16A, S0 is capable of being demodulated according to a demodulation pattern comprised of a portion 1501 at the left side of the vertical axis and a portion 1502 at the right side of the vertical axis. In other words, it is possible to demodulate such a bit in the portion 1301 at the left side of the vertical axis to "0", while demodulating such a bit in the portion 1302 at the right side of the vertical axis to "1".

In addition, with respect to outputs of the demodulation sections that demodulate S1 to S5 in the demodulation in 64QAM, since corresponding data does not exist originally, portions 1503 to 1512 illustrated in FIGs.16B to 16F cannot be used, and errors are detected in error detecting sections corresponding to the demodulation sections. Then with respect to S1 to S5, repeat is requested. The repeat is performed as in the first embodiment.

According to this embodiment, even when the transmitting-side apparatus transmits data using either modulation scheme among the modulation schemes of 32QAM to BPSK, the receiving-side apparatus is capable of demodulating the data by a demodulation scheme corresponding to the same modulation scheme. In other words, when the transmitting-side apparatus transmits data while modulating the data by smaller modulation level than the largest modulation level allowing the demodulation on a demodulation side, it is possible to accurately demodulate data of units actually transmitted. It is thereby possible for the receiving-side apparatus to demodulate all transmitted data without knowing (being aware at all) a modulation scheme of the transmitting-side apparatus. In particular, in a combination of this embodiment and the first embodiment, it is possible to set a unit for error detection independently for each bit, to perform finer control, and to perform transmission with more accuracy.

As a result, the need is eliminated of notifying a modulation scheme (modulation level broadcast signal) from a transmitting-side apparatus to a receiving-side apparatus, and it is thereby possible to use downlink resource effectively. Further, since the need is eliminated of notifying a modulation scheme from a transmitting-side apparatus to a receiving-side apparatus, it is possible to reduce the time during which a modulation level broadcast signal is demodulated and then data is demodulated like the conventional method, and to decrease data delay. Further, it is possible to shorten delay of repeat request.

Moreover, in the adaptive modulation communication system according to this embodiment, even when transmission is not performed, data transmission success indicates 0 unit, thereby enabling the detection.

In order to facilitate the adaptive modulation communication system according to this embodiment, arrangements of pilot signals in a signal space diagram are set as illustrated in FIGs.11, 13 and 15. For example, when the largest modulation level is set at 64, as shown in FIGs.11 and 13, pilot signals are assigned amplitude and phase of center positions (denoted by X in the figure) in quadrants, respectively, in the signal space diagram. It is thereby possible to share pilot signals in either modulation scheme, and to receive the pilot signals similarly in either modulation scheme.

Further, with respect to the arrangement of pilot signals, pilot points are set at positions spaced apart from respective axes by a distance corresponding to a predetermined phase rotation, or at positions set corresponding to the amplitude predetermined number times the predetermined amplitude. In this way, as described above, it is possible to share pilot signals in either modulation scheme, and to receive the pilot signals similarly in either modulation scheme. Further, since it is possible to provide the arrangement of pilot signals with versatility, frame format can be determined readily. In addition, in a modulation scheme that does not provide amplitude with information such as BPSK, since the amplitude of a pilot signal is not restricted, pilot signals can be set with more versatility.

### (Third embodiment)

This embodiment describes a case of applying the adaptive modulation communication system of the present invention to star-16QAM and 16PSK modulation schemes. Herein, the casewill be described of applying the adaptive modulation communication system of the present invention to star-16QAM and 16PSK modulation schemes, using 8PSK.

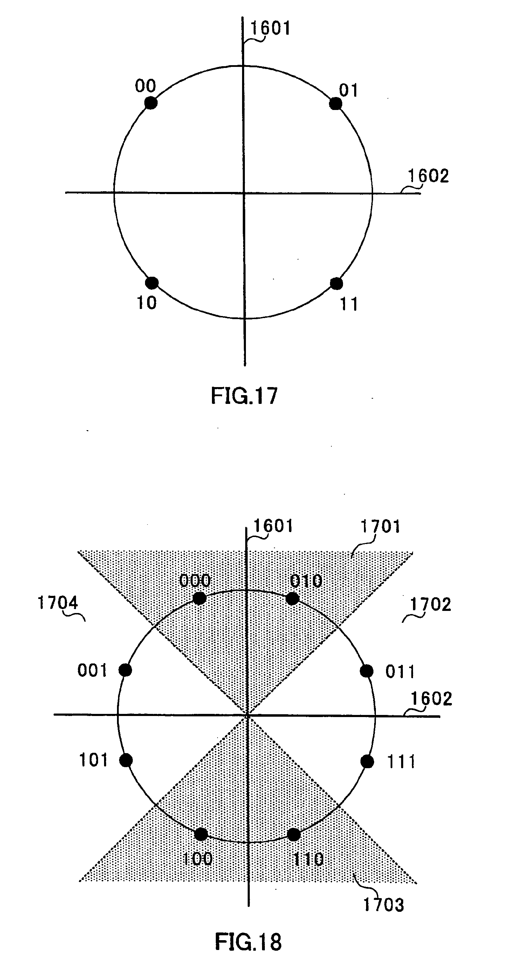

FIG.17 is a diagram to explain a signal space diagram of QPSK. FIG.18 is a diagram to explain a signal space diagram of 8PSK. In FIG.17, with respect to a first bit (upper bit), such bits are "0" above horizontal axis 1602, while being "1" under horizontal axis 1602, with axis 1602 as a boundary. With respect to a second bit (lower bit), such bits are "0" at the left of vertical axis 1601, while being "1" at right of vertical axis 1601, as viewed in the figure, with vertical axis 1601 as a boundary. Accordingly, by determining the foregoing, it is possible to demodulate 2 bits of QPSK.

In FIG.18, the most significant bits and second significant bits are capable of being demodulated as the same way as in QPSK. The least significant bits are determined using portions 1701 to 1704 each between axes at 45° to vertical axis 1601 and horizontal axis 1602. In other words, such bits are "0" in portions 1701 and 1703 (where an absolute value of vertical axis 1601 is greater than that of horizontal axis 1602), while being "1" in portions 1702 and 1704 (where an absolute value of vertical axis 1601 is smaller than that of horizontal axis 1602). Accordingly, by determining the foregoing, it is possible to demodulate information of three bits of 8PSK.

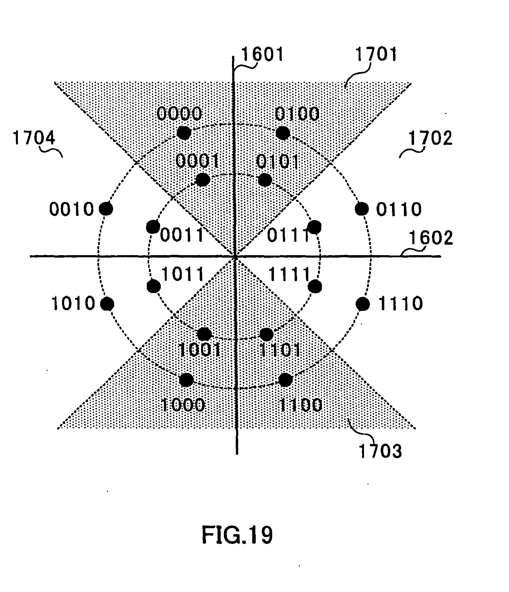

FIG.19 is a diagram to explain a signal space diagram of star-16QAM. In FIG.19, the most significant bits to third significant bits are capable of being demodulated in the same way as in 8PSK. With respect to a least significant bit, it is determined whether such a bit is larger or smaller than a predetermined threshold with respect to the amplitude. In other words, such bits larger than the predetermined threshold with respect to the amplitude (existing on the outer circle) are "0", while such bits smaller than the predetermined threshold with respect to the amplitude (existing on the inner circle) are "1". Accordingly, by determining the foregoing, it is possible to demodulate information of four bits of star-16QAM.

While the case is described above where a single threshold is used with respect to the amplitude, the present invention is applicable to a casewhere a plurality of thresholds is used with respect to the amplitude. By thus using a plurality of thresholds for the amplitude to obtain a plurality of criterion steps with respect to the amplitude, it is possible to make an amplitude determination up to less significant bits, thereby enabling demodulation of signals modulated -by star-QAM of larger modulation level. In addition, when setting a plurality of thresholds with respect to the amplitude, it is possible to change correspondence between threshold and bit as appropriate.

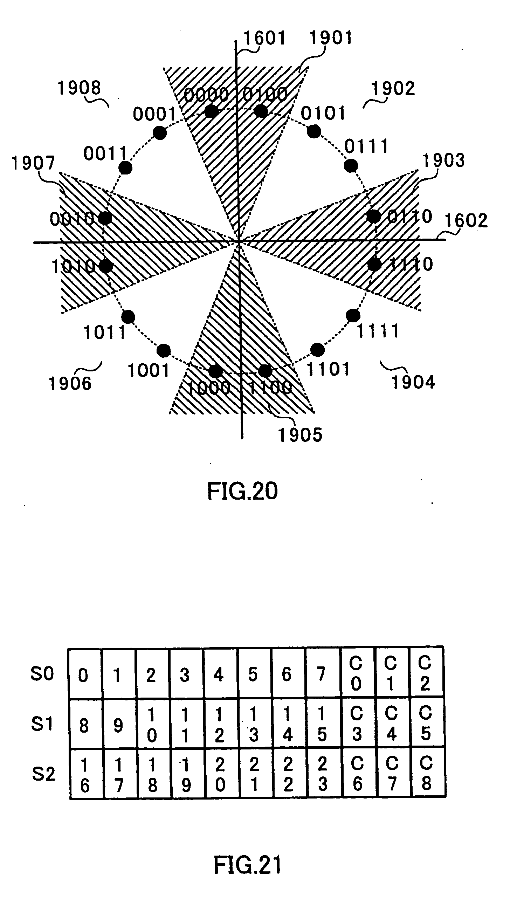

FIG.20 is a diagram to explain a signal space diagram of 16PSK. In FIG.20, the most significant bits to third significant bits are capable of being demodulated in the same way as in 8PSK. The least significant bits are determined using portions 1901 to 1908 each between axes each at 22.5° and 67.5° to vertical axis 1601 and horizontal axis 1602. In other words, such bits are "0" in portions 1901, 1903, 1905 and 1907 (portions between axes of 22.5° and 67.5° including vertical axis 1601 or horizontal axis 1602), while being "1" in portions 1902, 1904, 1906 and 1908 (portions between axes of 22.5° and 67.5° with no vertical axis 1601 or horizontal axis 1602 included). Accordingly, by determining the foregoing, it is possible to demodulate information of four bits of 16PSK.

While the case is described above of using two types of phase determination axes (phase determination axes passing through the origin point in the signal space diagram) with respect to the least significant bit, the present invention is applicable to a case of using three or more types of phase determination axes with respect to the least significant bit. By thus using three or more phase determination axes with respect to the least significant bit to obtain a plurality of criterion steps in phase determination, it is possible to make a phase determination up to less significant bits, thereby enabling demodulation of signals modulated by modulation scheme of larger modulation level. In addition, when setting a plurality of phase determination axes, it is possible to change correspondence between phase determination axis and bit as appropriate.

Further, it is possible for demodulators capable of demodulating signals modulated by star-QAM illustrated in FIGs.19 and 20 to demodulate modulated signals modulated by an upper modulation scheme (modulation scheme with less bits assigned to one symbol). For example, it is possible for a demodulator capable of demodulating signals modulated by star-16QAM to demodulate transmitted bits when demodulating modulated signals modulated by an upper modulation scheme (for example, QPSK and 8PSK) corresponding to the largest-modulation-level modulation scheme among demodulation capabilities of the demodulator. In addition, the phase determination and amplitude determination in the adaptive modulation communication system using star-QAM are capable of being carried out in a combination thereof.

A case will be described of transmitting signals in the adaptive modulation communication system of this embodiment. FIG.21 is a diagram to explain a case of transmitting signals in 8PSK. In FIG.21, S0 to S2 indicate bits assigned to the most to third significant bits respectively in 8PSK. Signals of 24 bits (0 to 23) are divided into three groups, while adding error detecting bits C0 to C2 to bits 0 to 7, adding error detecting bits C3 to C5 to bits 8 to 15, and adding error detecting bits C6 to C8 to bits 16 to 23, and resultant signals are transmitted.

It is assumed that a receiving side does not know that either modulation scheme among QPSK, 8PSK and star-16QAM is used to transmit signals. In this case, the demodulation is performed while assuming the modulation scheme as star-16QAM which is the largest-modulation-level modulation scheme. Since it is possible to demodulate S0 to S2 accurately as described even in demodulating as star-16QAM, an error is not detected. However, since S3 is not transmitted, an error is detected thereon.

Accordingly, the receiving side accepts bits 0 to 23 of S0 to S2 as correct signals. Thus, error detecting bits are added every same bits collectively over a plurality of symbols and a receiving side performs error detection, whereby it is possible to detect only transmitted bits as effective bits. In this way, it is possible to accurately perform demodulation without a communication party notifies of a modulation scheme used in transmission.

The case is described above where the largest-modulation-level modulation scheme is star-16QAM and transmitted modulated signals are modulated by 8PSK. However, the present invention is applicable to a case where the largest-modulation-level modulation scheme is an M-ary modulation scheme whose modulation level is exceeding 16, and further to a case where a phase modulation scheme is not a star modulation scheme. Moreover, the present invention is also applicable to a case where an M-ary modulation scheme has modulation level both in the amplitude and phase.

It is preferable in the first to third embodiments to change a modulation scheme with time in the transmitting-side apparatus. It is thereby possible to transmit data with an optimal modulation scheme corresponding to channel quality. Even in this case, it is not necessary to notify the modulation scheme to the receiving-side apparatus. In this case, the modulation scheme is determined based on channel quality information such as received SIR (Signal to Interference Ratio), received electric field intensity, error rate, and observation of transmit power control command. The channel quality may be of broadcast information indicative of a result measured in the receiving-side apparatus. Further, in a TDD (Time Division Duplex) system, since uplink and downlink channel states are considered to be almost the same, it may be possible to use a result obtained by measuring the quality of the opposite channel.

Further, it may be possible to determine the channel quality from a repeat request signal to reflect in change of modulation scheme. In other words, it may be possible that the channel quality is estimated from the repeat request signal, and based on the estimated result, the modulation scheme is varied as appropriate. For example, in the case where signals of 16QAM are transmitted and for example, three or more repeat requests are received, it may be determined that 16QAM is not optimal, and the modulation scheme is switched to a smaller-modulation-level modulation scheme such as 8QAM. Further, in the case of receiving two repeat requests, it may be determined that all the bits are properly transmitted, and the modulation scheme is continued or switched to a larger-modulation-level modulation scheme.

In the case of determining the channel quality from the repeat request to reflect in change of modulation scheme, it may be possible to reflect a plurality of previous repeat request results. For example, in the case where signals of 16QAM are transmitted and four or more repeat requests are received, it may be determined that 16QAM is not optimal, and the modulation scheme is switched to a smaller-modulation-level modulation scheme such as 8QAM. In the case of receiving three repeat requests, the determination is made with previous repeat request included, and in the case of receiving three repeat requests twice in row, the modulation scheme is switched to a smaller-modulation-level modulation scheme such as 8QAM. Further, in the case of receiving two repeat requests, it may be determined that all the bits are properly transmitted, and the modulation scheme is continued or switched to a larger-modulation-level modulation scheme.

Further, in the case of reflecting a plurality of previous repeat request results, it may be possible to use an average value of the number of previous repeat requests and to use an average value after multiplying an forgetting factor. Furthermore, it may be possible to generate a state transition diagram of modulation scheme to vary a modulation scheme according to the diagram.

The above first to third embodiments describe the case where the transmitting-side does not transmit any information on a modulation scheme at all. However, in the present invention it may possible to broadcast on a broadcast channel candidates for the modulation scheme used in the transmitting-side apparatus. For example, the information is broadcast on a broadcast channel that a base station supports only BPSK, QPSK, 8QAM and 16QAM. Thus in communication terminals, it is not necessary to receive signals corresponding to 32QAM and 64QAM, and it is only required to demodulate signals corresponding to modulation schemes that the base station supports, thereby enabling reduced power consumption.

Further, it may be possible for a receiving-side apparatus to notify modulation schemes that the receiving-side apparatus supports, for example, in communicating protocols with a transmitting-side apparatus. It is thereby possible for the transmitting-side apparatus to transmit signals while selecting a modulation scheme from only among modulation schemes that the receiving-side apparatus supports. As a result, it may be possible to carry out the control in the above embodiments as appropriate corresponding to what the receiving-side apparatus supports. For example, when a communication terminal supports only up to 16QAM, a base station performs only up to 16QAM only for the communication terminal. At this point, the base station uses only up to 16QAM even when up to 64QAM are available. In this case, since radio resource is wasted, such a terminal may be imposed a penalty such as a fine.

Furthermore, in determining modulation scheme candidates , it may be possible to determine the candidates corresponding to an average state of a channel between a transmitting-side apparatus and receiving-side apparatus. For example, when a communication terminal exists at a place far from a base station and the base station determines that only BPSK to 8QAM can be used, the base station notifies the communication terminal of transmitting signals according to BPSK to 8QAM, using a low-rate control signal or first protocol. In this way, the communication terminal does not need to receive signals corresponding to 32QAM and 64QAM, and is capable of suppressing wasteful power consumption.

On the other hand, in communicating with a terminal existing near a base station in high quality state, it may be possible to select only 8QAM to 64QAM as candidates. The range is considered to vary with movement of communication terminal, and is rearranged as appropriate to be updated. The base station is capable of determining a candidate range of modulation scheme using selection histogram of previous modulation schemes, statistics and average of channel quality information. Further, when data is not transmitted during a long period, it may be possible that such a message is notified that data is not transmitted during a long period, and that based on the message, the candidate range of modulation scheme is determined.

The repeat error correcting algorithm is not limited in particular in the above first to third embodiments. Accordingly, as a repeat error correcting algorithm, examples are Stop and Wait ARQ, Go Back N ARQ, Selective Repeat ARQ and Hybrid ARQ.

In particular, in the case of using Hybrid ARQ, since the same signal is transmitted due to repeat in type I, the receiving-side apparatus is capable of performing weighting with likelihood to combine amplitude.

Meanwhile, it is necessary in type II and type III to determine whether the repeat is due to an error in transmission or is due to the fact that a signal is not transmitted actually because modulation level is low and therefore the signal cannot be received.

The transmitting-side apparatus knows the transmitted data, and therefore is capable of making such a determination. However, the receiving-side apparatus does not know the transmitted data, and therefore needs to perform both transmissions of repeat and first transmission. In this case, when an information amount in repeat is different from a general transmit data amount, the information amount is brought coincident by transmitting a plurality of repeats successively or collecting a plurality of repeats.

The present invention is not limited to the above first to third embodiments, and is capable of being carried out with various modifications thereof. For example, while the above embodiments describe the case that the largest modulation level is 64 in the receiving-side apparatus, the present invention is applicable similarly to a case that the largest modulation level in the receiving-side apparatus exceeds 64 such as 128 and 256. Any modulation scheme may be a candidate corresponding to performance. Accordingly, modulation levels used in the first and second embodiments are not limited in particular.

The adaptive modulation communication system of the present invention is applicable to a digital radio communication system between a communication terminal and base station, and broadcast system.

An adaptive modulation communication system of the present invention is an adaptive modulation communication system that adaptively varies a modulation scheme for each transmit unit, and adopts a configuration where a transmitting-side apparatus sets different error detecting units corresponding to bit position, and transmits data subjected to error detecting processing on a different error detecting unit basis corresponding to bit position, and a receiving-side apparatus performs demodulation independently for each of the error detecting units using different demodulation patterns to obtain received data.

According to this configuration, even when the transmitting-side apparatus uses either modulation scheme among M-ary modulation schemes to transmit signals, it is possible for the receiving-side apparatus to demodulate data by a demodulation method corresponding to the modulation scheme. In other words, when signals are transmitted according to an M-ary modulation scheme of smaller modulation level than the largest modulation level allowing the demodulation on a demodulation side, it is possible to accurately demodulate data of units actually transmitted. Thus, the receiving-side apparatus is capable of demodulating all transmitted data without knowing (being aware at all) a modulation scheme of the transmitting-side apparatus.

As a result, the need is eliminated of notifying a modulation scheme (modulation level broadcast signal) from a transmitting-side apparatus to a receiving-side apparatus, and it is thereby possible to use downlink resource effectively. Further, since the need is eliminated of notifying a modulation scheme from a transmitting-side apparatus to a receiving-side apparatus, it is possible to reduce the time during which a modulation level broadcast signal is demodulated and then data is demodulated like the conventional method, and to decrease data delay. Further, it is possible to shorten delay of repeat request.

The adaptive modulation communication system of the present invention adopts a configuration, in the above configuration, where the modulation scheme is varied adaptively among M-ary modulation schemes each with a square root of the number of signal points being an integer.

The adaptive modulation communication system of the present invention adopts a configuration, in the above configuration, where the modulation scheme is varied adaptively among M-ary modulation schemes each with a square root of the number of signal points being not an integer.

The adaptive modulation communication system of the present invention adopts a configuration, in the above configuration, where the modulation scheme is varied adaptively among M-ary modulation schemes each using phase determination axes passing through the origin point in the signal space diagram.

The adaptive modulation communication system of the present invention adopts a configuration, in the above configuration, where the M-ary modulation schemes using phase determination axes passing through the origin point in the signal space diagram are modulation schemes in which identification in an amplitude direction is performed.

The adaptive modulation communication system of the present invention adopts a configuration, in the above configuration, where error correcting coding is performed collectively every a plurality of bits, and the receiving-side apparatus detects bits transmitted from the transmitting-side apparatus as effective bits by performing error detection.

According to these configurations, it is possible to perform accurate demodulation without knowing (being aware at all) a modulation scheme that a communication party uses to transmit signals.

The adaptive modulation communication system of the present invention adopts a configuration, in the above configuration, where an arrangement of signal points is set so that a difference between the number of signal points in the I-axis direction and the number of signal points in the Q-axis direction is small. It is thereby possible to improve transmission efficiency when there is a difference between the number of signal points in the I-axis direction and the number of signal points in the Q-axis direction.

The adaptive modulation communication system of the present invention adopts a configuration, in the above configuration, where positions of pilot signals are set using a value half the maximum amplitude in the signal space diagram of an M-ary modulation scheme having the largest modulation level.

According to this configuration, it is possible to share pilot signals in either modulation scheme, and to receive the pilot signals similarly in either modulation scheme.

The adaptive modulation communication system of the present invention adopts a configuration, in the above configuration, where a repeat request is performed for each error detecting unit.

The adaptive modulation communication system of the present invention adopts a configuration, in the above configuration, where the modulation scheme is varied adaptively based on channel quality estimated from the repeat request.

A transmitting apparatus of the present invention adopts a configuration provided with a section that sets different error detecting units corresponding to bit position, and a section that transmits data subjected to error detecting processing on a different error detecting unit basis corresponding to bit position.

A receiving apparatus of the present invention adopts a configuration provided with a section that receives data subjected to error detecting processing on a different error detecting unit basis corresponding to bit position, and a section that demodulates the data independently for each error detecting unit using different demodulation patterns to obtain received data

As described above, in the adaptive modulation communication system of the present invention, since the need is eliminated of notifying information on a modulation scheme or the like from a transmitting-side apparatus to a receiving-side apparatus, it is possible to use downlink resource effectively. Further, it is possible to reduce the time during which the information on the modulation scheme or the like is demodulated and then data is demodulated, and to decrease processing delay. As a result, it is also possible to shorten delay of repeat request.

### Industrial Applicability

The present invention is applicable to an adaptive modulation communication system used in a digital radio communication system.

## Claims

1. An adaptive modulation communication system comprising:
a transmitting apparatus comprising:
a determining section (102) adapted to determine a modulation level out of a range of modulation levels for data transmission,
a bit adding section (103) adapted to add an error detecting bit to each of plural error detecting units to be transmitted by the transmitting apparatus,
a bit sequence generation section (105) adapted to generate, based on the plural error detection units, a sequence of n bits to be mapped to a modulation signal point of a modulation scheme having the determined modulation level,
a modulation section (106) adapted to modulate, in accordance with a signal space diagram of modulation signal points of the modulation scheme of the determined modulation level, the generated sequence of n bits obtained from the error detecting units to a modulation signal point, wherein the position of each bit of the sequence relates to a mapping region in the signal space diagram of modulation signal points of the modulation scheme, and
a radio transmission section (107) adapted to transmit the modulated signal point as a transmission signal; and
a receiving apparatus comprising:
a radio reception section (112) adapted to receive the transmission signal comprising the modulated signal point transmitted by the transmitting apparatus,
n demodulation sections (113-1 - 113-n), each adapted to demodulate the modulated signal point in the received transmission signal using the highest modulation level of a set of available modulationlevels thereby taking into account the mapping regions to which the position of each bit of the sequence of n bits relates to, respectively, to thereby obtain a recovered sequence of bits,
wherein the demodulation sections (113-1 - 113-n) are further adapted to recover from the recovered sequence of bits the respective bit or bits of the error detection units within the recovered sequence of bits taking into account their positions in the sequence of bits, and
a plurality of error detect detecting sections (115-1 - 115-n) adapted to perform error detection on each of the error detecting units.

2. The system according to claim 1, wherein the modulation section (106) is further adapted to modulate the generated sequence of bits using a modulation scheme in which a phase direction is identified by an axis that crosses an origin point in a signal space diagram.

3. The system according to of claim 1, wherein the modulation section (106) is further adapted to modulate the generated sequence of bits using a modulation scheme in which an amplitude direction is further identified by an axis that crosses an origin point in a signal space diagram.

4. The system according to claim 1, wherein the determining section (102) is further adapted to determine the modulation level based on channel quality estimated from a repeat request.

5. The system according to claim 1, wherein the error detecting sections (115-1 - 115-n) are further adapted to output a bit without an error as an effective bit transmitted from the transmitting apparatus.

6. The system according to claim of claim 1, wherein the receiving apparatus further comprises a repeat request unit (117) adapted to send a repeat request to the transmitting apparatus according to an error detection result, per error detecting unit.

## Patentansprüche

1. Kommunikationssystem mit adaptiver Modulation, das umfasst:
eine Sendevorrichtung, die umfasst:
einen Bestimmungsabschnitt (102), der so eingerichtet ist, dass er eine Modulationsstufe aus einem Bereich von Modulationsstufen zum Senden von Daten bestimmt,
einen Abschnitt (103) zum Hinzufügen von Bits, der so eingerichtet ist, dass ein Fehlererfassungs-Bit zu jeder von mehreren Fehlererfassungs-Einheiten hinzufügt, die durch die Sendevorrichtung gesendet werden sollen,
einen Abschnitt (105) zum Erzeugen einer Bit-Sequenz, der so eingerichtet ist, dass er auf Basis der mehreren Fehlererfassungs-Einheiten eine Sequenz von n Bits erzeugt, die einem Modulationssignal-Punkt eines Modulationsschemas zugeordnet werden sollen, das die bestimmte Modulationsstufe hat,
einen Modulationsabschnitt (106), der so eingerichtet ist, dass er entsprechend einem Signalraumdiagramm von Modulationsignal-Punkten des Modulationsschemas der bestimmten Modulationsstufe die erzeugte Sequenz von n Bits, die aus den Fehlererfassungs-Einheiten gewonnen wird, zu einem Modulationsignal-Punkt moduliert,
wobei sich die Position jedes Bits der Sequenz auf einen Zuordnungsbereich in dem Signalraumdiagramm von Modulationsignal-Punkten des Modulationsschemas bezieht, und
einen Funk-Sendeabschnitt (107), der so eingerichtet ist, dass er den modulierten Signal-Punkt als ein Sendesignal sendet; und
eine Empfangsvorrichtung, die umfasst:
einen Funk-Empfangsabschnitt (112), der so eingerichtet ist, dass er das durch die Sendevorrichtung gesendete Sendesignal empfängt, das den modulierten Signal-Punkt umfasst,
n Demodulationsabschnitte (113-1 - 113-n), die jeweils so eingerichtet sind, dass sie den modulierten Signal-Punkt in dem empfangenen Sendesignal unter Verwendung der höchsten Modulationsstufe einer Gruppe verfügbarer Modulationsstufen demodulieren und so die Zuordnungsbereiche berücksichtigen, auf die sich die Position jedes Bits der Sequenz von n Bits jeweils bezieht, um damit eine wiederhergestellte Sequenz von Bits zu gewinnen,
wobei die Demodulationsabschnitte (113-1 - 113-n) des Weiteren so eingerichtet sind, dass sie aus der wiederhergestellten Sequenz von Bits das/die jeweilige/n Bit/s der Fehlererfassungs-Einheiten innerhalb der wiederhergestellten Sequenz von Bits unter Berücksichtigung ihrer Positionen in der Sequenz von Bits wiederherstellen, und
eine Vielzahl von Fehlererfassungs-Abschnitten (115-1 - 115-n), die so eingerichtet sind, dass sie Fehlererfassung an jeder der Fehlererfassungs-Einheiten durchführen.

2. System nach Anspruch 1, wobei der Modulationsabschnitt (106) des Weiteren so eingerichtet ist, dass er die erzeugte Sequenz von Bits unter Verwendung eines Modulationsschemas moduliert, in dem eine Phasenrichtung durch eine Achse bestimmt wird, die einen Ursprungspunkt in einem Signalraumdiagramm schneidet.

3. System nach Anspruch 1, wobei der Modulationsabschnitt (106) des Weiteren so eingerichtet ist, dass er die erzeugte Sequenz von Bits unter Verwendung eines Modulationsschemas moduliert, in dem eine Amplitudenrichtung des Weiteren durch eine Achse bestimmt wird, die einen Ursprungspunkt in einem Signalraumdiagramm schneidet.

4. System nach Anspruch 1, wobei der Bestimmungsabschnitt (102) des Weiteren so eingerichtet ist, dass er die Modulationsstufe auf Basis einer anhand einer WiederholungsAnforderung geschätzten Kanalqualität bestimmt.

5. System nach Anspruch 1, wobei die Fehlererfassungs-Abschnitte (115-1 - 115-n) des Weiteren so eingerichtet sind, dass sie ein Bit ohne einen Fehler als ein effektives Bit ausgeben, das von der Sendevorrichtung gesendet wird.

6. System nach Anspruch 1, wobei die Empfangsvorrichtung des Weiteren eine Wiederholungs-Anforderungseinheit (117) umfasst, die so eingerichtet ist, dass sie pro Fehlererfassungs-Einheit eine Wiederholungsanforderung entsprechend einem Fehlererfassungs-Ergebnis zu der Sendevorrichtung sendet.

## Revendications

1. Système de communication à modulation adaptative comprenant :
un dispositif de transmission comprenant :
une section de détermination (102) adaptée à déterminer un niveau de modulation dans une gamme de niveaux de modulation pour la transmission de données,
une section d'addition de bit (103) adaptée à ajouter un bit de détection d'erreur à chaque unité de différentes unités de détection d'erreurs à transmettre par le dispositif de transmission ;
une section de génération de séquence de bits (105) adaptée à générer, en se basant sur les différentes unités de détection d'erreurs, une séquence de n bits à mapper sur un point de signal de modulation d'un aménagement de modulation ayant le niveau de modulation déterminé,
une section de modulation (106) adaptée à moduler, en fonction d'un diagramme d'espace de signal de points de signal de modulation de l'aménagement de modulation du niveau de modulation déterminé, la séquence générée de n bits obtenue depuis les unités de détection d'erreurs sur un point de signal de modulation, dans lequel la position de chaque bit de la séquence concerne une région de mappage dans le diagramme d'espace de signal des points de signal de modulation de l'aménagement de modulation, et
une section de transmission radio (107) adaptée à transmettre le point de signal modulé en tant que signal de transmission ; et
un dispositif de réception comprenant :
une section de réception radio (112) adaptée à recevoir le signal de transmission comprenant le point de signal modulé transmis par le dispositif de transmission,
n sections de démodulation (113-1 à 113-n) chacune étant adaptée à démoduler le point de signal modulé dans le signal de transmission reçu en utilisant le niveau de modulation le plus élevé d'un ensemble de niveaux de modulation disponibles de façon à tenir compte des régions de mappage concernées par la position de chaque bit de la séquence de n bits, respectivement, pour obtenir ainsi une séquence de bits récupérés,
dans lequel les sections de démodulation (113-1 à 113-n) sont adaptées en outre à récupérer de la séquence de bits récupérés le ou les bits respectifs des unités de détection d'erreurs dans la séquence de bits récupérés en tenant compte de leurs positions dans la séquence de bits, et
une pluralité de sections de détection d'erreurs (115-1 à 115-n) adaptées à effectuer une détection d'erreurs sur chacune des unités de détection d'erreurs.

2. Système selon la revendication 1, dans lequel la section de modulation (106) est adaptée en outre à moduler la séquence de bits générée en utilisant un aménagement de modulation dans lequel la direction de la phase est identifiée par un axe qui passe par un point d'origine dans un diagramme d'espace de signal.

3. Système selon la revendication 1, dans lequel la section de modulation (106) est adaptée en outre à moduler la séquence de bits générée en utilisant un aménagement de modulation dans lequel la direction de l'amplitude est identifiée en outre par un axe qui passe par un point d'origine dans un diagramme d'espace de signal.

4. Système selon la revendication 1, dans lequel la section de détermination (102) est adaptée en outre à déterminer le niveau de modulation en se basant sur la qualité de la voie estimée d'après une demande de répétition.

5. Système selon la revendication 1, dans lequel les sections de détection d'erreurs (115-1 à 115-n) sont adaptées en outre à fournir en sortie un bit sans erreur en tant que bit effectif transmis par le dispositif de transmission.

6. Système selon la revendication 1, dans lequel le dispositif de réception comprend en outre une unité de demande de répétition (117) adaptée à envoyer une demande de répétition au dispositif de transmission conformément à un résultat de détection d'erreurs, par unité de détection d'erreurs.
